(19) Europäisches Patentamt

European Patent Office

Office européen des brevets

(11) EP 0 634 730 B1

(12) **EUROPÄISCHE PATENTSCHRIFT**

(45) Veröffentlichungstag und Bekanntmachung des Hinweises auf die Patenterteilung:
**20.03.2002 Patentblatt 2002/12**

(51) Int Cl.⁷: $G06K\ 7/10$

(21) Anmeldenummer: **94110757.5**

(22) Anmeldetag: **11.07.1994**

(54) **Verfahren und Abtastanordnung zur Identifizierung eines aus aufeinanderfolgenden hellen und dunklen Feldern bestehenden Codes**

Method and reading device for identifying a code composed of alternated light and dark zones

Méthode et lecteur pour identification d'une code composé de zones alternées claires et sombres

(84) Benannte Vertragsstaaten:
**DE FR GB IT**

(30) Priorität: **12.07.1993 DE 4323293**

(43) Veröffentlichungstag der Anmeldung:
**18.01.1995 Patentblatt 1995/03**

(73) Patentinhaber: **SICK AG**
**79183 Waldkirch (DE)**

(72) Erfinder: **Blöhbaum, Frank, Dipl.-Ing.**
**D-79187 Bad Krozingen (DE)**

(74) Vertreter: **Manitz, Finsterwald & Partner**
**Martin-Greif-Strasse 1**
**80336 München (DE)**

(56) Entgegenhaltungen:
**US-A- 3 882 464          US-A- 4 354 101**
**US-A- 4 528 443**

• **PATENT ABSTRACTS OF JAPAN vol. 007, no. 192 (P-218), 23. August 1983 & JP 58 092066 A (FUJITSU KK), 1. Juni 1983**

**Beschreibung**

Die Erfindung betrifft ein Verfahren nach dem Oberbegriff des Anspruches 1 und eine vorzugsweise mit einem Laser arbeitende optische Abtastanordnung nach dem Oberbegriff des Patentanspruchs 9. Abtastanordnungen mit Abtastvorrichtungen zum Lesen von Codes sind bekannt (DE-PS 23 40 688). Im allgemeinen arbeiten diese Abtastvorrichtungen so, daß ein Laserstrahl über eine Optik und ein Spiegelrad oder einen Schwingspiegel als Fahrstrahl die Fläche, auf der der Code angeordnet ist, periodisch abtastet. Je nachdem, ob der Abtastlichtfleck auf eine helle oder dunkle Stelle des Codes fällt, wird mehr oder weniger Licht zur Abtastvorrichtung zurückgestreut, welche diese Lichtmenge z.B. nach dem Autokollimationsprinzip erfaßt und ein entsprechendes Auswertesignal abgibt. Eine weitere Abtastvorrichtung sowie ein entsprechendes Verfahren zum Lesen von Codes gemäß den Oberbegriffen der unabhängigen Ansprüche sind aus der US-A-4,354,101 bekannt. Bei diesem Verfahren werden die Breiten von aufeinanderfolgenden Codeelementen in Echtzeit gemessen und in einem RAM abgespeichert. Die abgespeicherten Codeelemente werden anschließend aus dem Speicher ausgelesen und zur Decodierung weiter bearbeitet.

Entscheidend für die Zuverlässigkeit der Codelesung ist nun die Schärfe und Größe des Abtastlichtfleckes, welcher über den Code hinweggeführt wird. Die Schärfe des Abtastlichtfleckes wird dabei von den Abbildungseigenschaften der Abtastvorrichtung maßgeblich mitbestimmt. Die Auflösung feiner Bildstrukturen wird begrenzt von der Abtastfrequenz des reflektierenden Lichtes und dem Lichtfleckdurchmesser.

Die Lichtfleckform und -größe ändert sich in Abhängigkeit vom Abstand der Abtastvorrichtung von der den Code tragenden Oberfläche, wenn nicht z.B. durch eine Autofokuseinrichtung eine Schärfe- und/oder Vergrößerungsnachstellung erfolgt. Nur in einem eng begrenzten Abstandsbereich entspricht die Modulation des vom Code rückgestreuten Lichtes in einer definiert auswertbaren Weise der tatsächlichen Folge von Codefeldern. Außerhalb dieses Fokusbereiches ändern sich die Lichtfleckform und -größe derart, daß die Hell-Dunkel-Modulation des vom Code zurückgestreuten Lichtes die Verhältnisse des Originalcodes nicht mehr genau genug wiedergibt, um ein entsprechendes Ausgangssignal zu erzeugen.

Es entstehen komplizierte Bildverzerrungen, die insbesondere bei den folgenden Anwendungen ein Problem darstellen:

- Erkennen und Klassifizieren von Bildern durch Vergleich mit Normbildern;
- stark schwankende Änderungen des Abstandes der Abtastvorrichtung von der den Code tragenden Fläche, wobei die Grenzen des Fokusbereiches überschritten werden;
- schneller Bildwechsel, der eine Autofokusregelung auf optischem Wege nur schwer realisierbar macht.

Nach dem Stand der Technik lassen sich die aufgeführten Schwierigkeiten nur mit teuren Abbildungsoptiken oder mit einer sehr schnell arbeitenden, dafür aber sehr aufwendigen und kostspieligen Autofokusregelung überwinden.

Das Ziel der vorliegenden Erfindung besteht darin, ein Verfahren und eine Abtastanordnung der eingangs genannten Gattung zu schaffen, bei denen die außerhalb des Fokusbereiches vorkommenden optischen Verzerrungen des Abtastlichtfleckes hingenommen werden, gleichwohl aber innerhalb eines gegenüber dem eigentlichen Fokusbereich deutlich erweiterten Bereich der Entfernungen zwischen Abtastvorrichtung und den Code tragender Fläche eine zuverlässige Erkennung und Klassifizierung des abgetasteten Codes gewährleistet wird, ohne daß eine optische Nachstellung erfolgt.

Zur Lösung dieser Aufgabe sind die Merkmale der kennzeichnenden Teile der Ansprüche 1 und 9 vorgesehen.

Der Grundgedanke der Erfindung besteht darin, daß Kenntnisse über den Charakter des verwendeten Codes und die bei einer speziellen Abtastvorrichtung innerhalb eines bestimmten Abstandsvariationsbereiches vorhandenen optischen Verzerrungen des Abtastlichtflecks vorliegen bzw. festliegen und z.B. empirisch ermittelt werden können und daß durch Berücksichtigung dieser Kenntnisse aus den Empfangssignalen, die sich von der tatsächlichen Codestruktur zum Teil erheblich unterscheiden können, auf die richtige Codestruktur zurückgeschlossen wird.

Zu diesem Zwecke ist es erforderlich, ein Verfahren zu finden, mit dem die Information zweier benachbarter Modulbreiten so miteinander verrechnet wird, daß eine Verschiebung der gemessenen Modulbreiten in Richtung der tatsächlichen Modulbreiten des betrachteten Moduls erfolgt. Ein Korrekturverfahren, das diese Verschiebungsoperation mit herkömmlichen Verfahren der Informationsverarbeitung vornimmt, ist nicht oder nur mit hohem Aufwand zu entwickeln. Die Aufgabe, die Verschiebung der gemessenen Modulbreiten in Richtung der tatsächlichen Modulbreiten vorzunehmen, wird daher erfindungsgemäß durch ein iteratives Verfahren gelöst. Dabei wird zunächst von den schlechtest möglichen Grenzwerten für Modulbreiten-Kombinationen ausgegangen, um daraus für das Verfahren wichtige Anfangsparameter wie die unten näher beschriebenen Zugehörigkeitsfunktionen und die Verknüpfungsoperationen festzulegen. Dann können noch weitere typische Kombinationen von Modulbreiten berücksichtigt werden, um die aus den schlechtest möglichen Grenzwerten für Modulbreiten-Kombinationen festgelegten Größen in Richtung auf eine genauere Verschiebung von gemessener zu tatsächlicher Modulbreiten anzupassen oder um den Umfang der verwendeten Größen zu diesem Zweck zu verändern. Dabei genügt es, ausgewählte typische Kombinationen an Stelle aller tatsächlich vorkommenden Kombinationen von Modulbreiten zu betrachten, so daß der Entwicklungsaufwand wesentlich verringert wird. Das aus den typischen Kombinationen von Modulbreiten entwickelte Verfahren, wie etwa das unten als Rechenbeispiel ausgeführte Korrekturverfahren, stellt ein approximiertes Modell der Abbildungseigenschaften der optischen Abtastvorrichtung und der Eigenschaften der weiteren, das elektrische Signal beeinflußenden Baugruppen wie etwa des Lichtempfängers in Abhängigkeit von der Fokuslage dar und ergibt damit bei allen vorkommenden Kombinationen von Modulbreiten eine Verschiebung der gemessenen zur tatsächlichen Modulbreiten.

Das Verfahren kann beispielsweise auf einem programmgesteuerten Mikroprozessor ausgeführt werden oder auch wie im unten beschriebenen Beispiel mittels einer fest verdrahteten Schaltung, die Speicher, in einem Speicher abgelegte Tabellen und Verknüpfungsstufen verwendet.

Voraussetzung für die Anwendung der Erfindung ist, daß die Korrekturwerte, d.h. die für das Verfahren bestimmten Größen, mit der gleichen Abtastvorrichtung ermittelt wurden, bei der sie später angewendet werden. Es muß also zunächst zur Bestimmung der Korrekturwerte eine optische Abtastvorrichtung verwendet werden, die jener gleicht, mit der die Korrekturwerte später verwendet werden. Kann man davon ausgehen, daß ein ganzer Satz oder Typ von optischen Abtastvorrichtungen optisch identisch ist, können die Korrekturwerte auch mit einer anderen optischen Abtastvorrichtung dieses Typs ermittelt werden und dann bei anderen Abtastvorrichtungen des gleichen Typs angewendet werden. Eine weitere wichtige Voraussetzung ist, daß auch die elektronischen Auswertegruppen, welche das auszuwertende elektrische Signal liefern, bei Ermittelung der Korrekturwerte die gleichen oder wenigstens vom gleichen Typ sind. Das mathematische Modellverfahren beinhaltet also neben den optischen Verzerrungen auch die Übertragungseigenschaften der Elektronik, insbesondere der verwendeten Differenzier- und Gleichrichterstufe.

Eine weitere Voraussetzung für die Anwendung der Erfindung ist, daß ein Code des gleichen Charakters bei Ermittlung der Korrekturwerte und bei der späteren Messung verwendet wird.

Vorteilhafte Weiterbildungen der Erfindung sind durch die Unteransprüche gekennzeichnet.

Das erfindungsgemäße Verfahren und die erfindungsgemäße Abtastanordnung werden exemplarisch am Beispiel der Erkennung von Strichcodes erläutert, die mit einem Laserscanner abgetastet werden und deren Abstand vom Laserscanner außerhalb des Fokusbereichs liegt. Bei Anordnung des die Abtastvorrichtung bildenden Laserscanners außerhalb des Fokusbereiches entspricht die Modulation des rückgestreuten Lichtes nicht mehr genau genug den Breitenverhältnissen der Module, insbesondere weil die Modulbreite beim Abtasten des Codes abhängig von der Modulbreite in den benachbarten Modulen verzerrt wird. Dies kann dazu führen, daß eine Decodierung bzw. Erkennung des Zeichens fehlerhaft oder unmöglich werden kann, wenn die ein Zeichen bildenden Module diesem Zeichen nach einem in der Technik bekannten Verfahren zugeordnet werden. Als ein derartiges Zuordnungsverfahren kann z.B. das Schwellwertverfahren verwendet werden, in dem jeder gemessene Modulbreite das nächstliegende, im Code auftretende ganzzahlige Vielfache der Basislauflänge zugeordnet wird und einer Gruppe diesen ganzzahligen Vielfachen der Basislauflänge dann ein entsprechendes Zeichen zugeordnet wird.

Die Verzerrung der Modulbreiten führt zu Lauflängenvergrößerungen und -verkleinerungen, die keine Entsprechung bei den Originalmoduln haben. Diese Verzerrungen können mathematisch nicht oder nur mit hohem Aufwand beschrieben werden.

Durch das erfindungsgemäße Verfahren und die erfindungsgemäße Abtastanordnung können diese Verzerrungen soweit korrigiert werden, daß innerhalb eines gegenüber dem Fokusbereich deutlich vergrößerten Entfernungsvariationsbereiches eine einwandfreie Erkennung eines in dem Zeichen enthaltenen Codes gewährleistet wird.

Die Erfindung wird im folgenden beispielsweise anhand der Zeichnung beschrieben; in dieser zeigt:

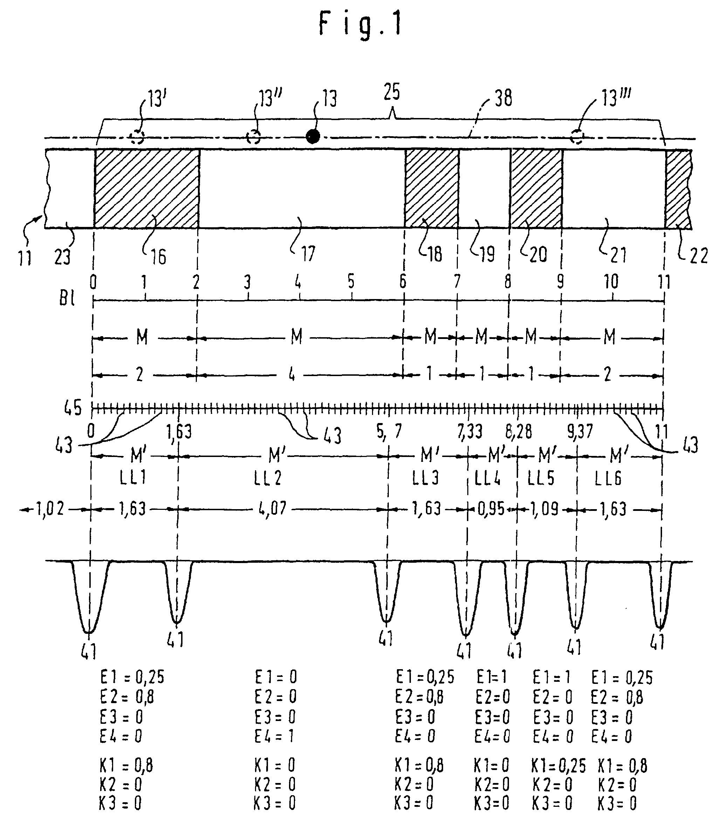

Fig. 1    eine schematische Darstellung eines Ausschnittes aus einem Strichcode und des dazugehörigen Empfangssignals am Ausgang einer Laser-Abtastvorrichtung,

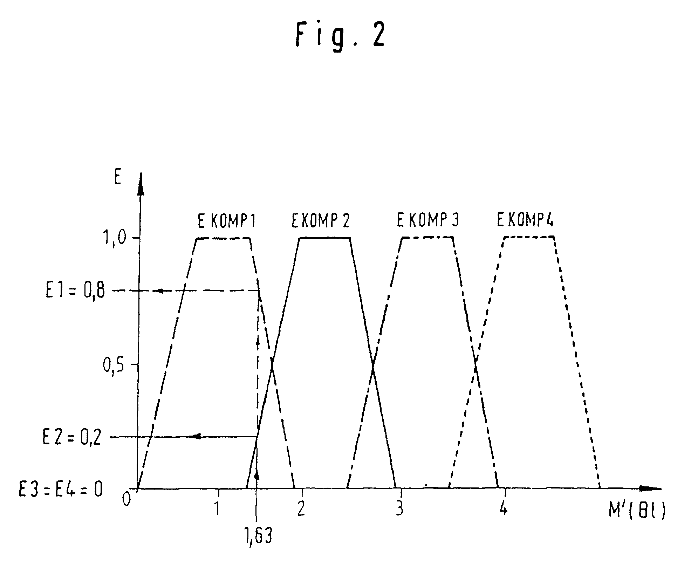

Fig. 2    eine graphische Darstellung einer ersten Zugehörigkeitsfunktion E, wobei auf der Abszisse die gemessene Modulbreite M' in Einheiten der Basislauflänge und auf der Ordinate die Bruchteile der Zugehörigkeit E1 bis E4 der gemessenen Modulbreite M zu den ganzzahligen Modulbreitenwerten 1, 2, 3, 4 aufgetragen ist,

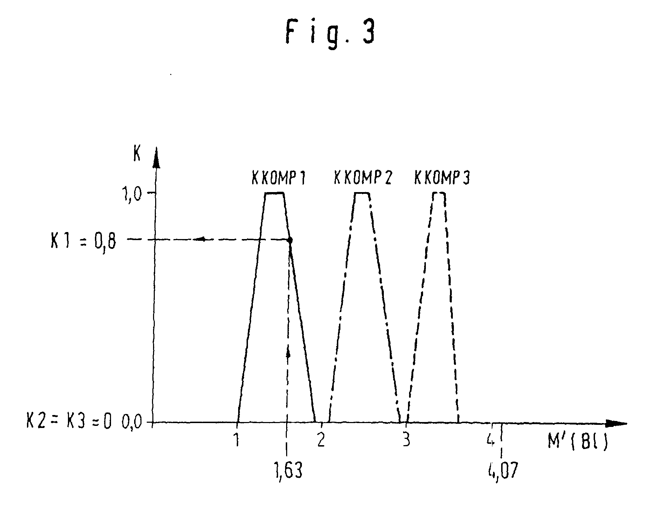

Fig. 3    eine graphische Darstellung einer zweiten Zugehörigkeitsfunktion K, wobei auf der Abszisse die gemessene Modulbreite M in Einheiten der Basislauflänge und auf der Ordinate die Korrekturwerte K1 bis K3 der gemessenen Modulbreite M zwischen den ganzzahligen Modulbreitenwerten 1, 2; 2, 3; 3, 4 aufgetragen ist,

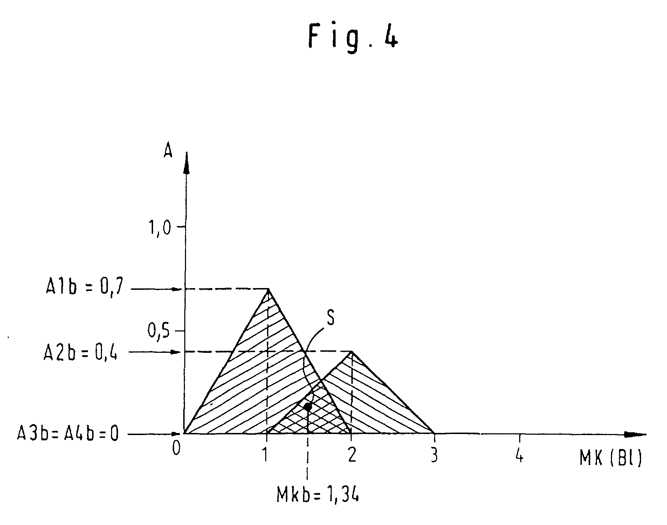

Fig. 4    eine grafische Darstellung einer Auswertefunktion, wobei auf der Abszisse die korrigierte Modulbreite Mk in Einheiten der Basislauflänge und auf der Ordinate die durch algebraische Verknüpfung erhaltenen Zugehörigkeitsbruchteile A1 bis A4 (von denen nur A1 und A2 von Null verschieden sind) einer Modulbreite M zu den ganzzahligen Modulbreitenwerten 1, 2 aufgetragen sind und unter den Zugehörigkeitswerten A1 bis A4 gleichschenklige Dreiecke zu den benachbarten ganzzahligen Modulbreiten 0, 2; 1,3 aufgespannt sind, und

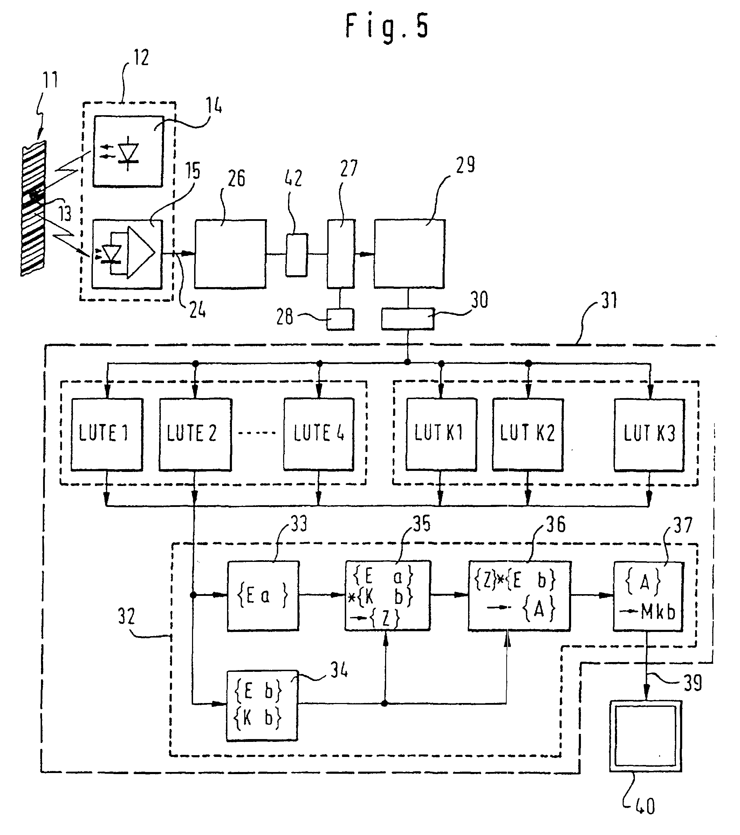

Fig. 5    ein Blockschaltbild einer erfindungsgemäßen optischen Abtastanordnung.

Nach Fig. 1 besteht ein Code 11 aus einer Vielzahl aufeinanderfolgender Zeichen 25, von denen in Fig. 1 nur eines vollständig dargestellt ist. Es möge sich hier um das erste Zeichen eines Codes 11 handeln, vor dem sich ein längeres weißes Feld 23 befindet. Im Anschluß an das Zeichen 25 folgt ein weiteres Zeichen, dessen erster Modul bei 22 noch angedeutet ist.

Das Zeichen 25 besteht aus sechs Moduln 16, 17, 18, 19, 20, 21, die abwechselnd dunkel und hell sind und jeweils eine Breite haben, die dem Einfachen, Zweifachen, Dreifachen oder Vierfachen einer Basislauflänge Bl gleich ist. Der erste dunkle Modul 16 weist eine Breite von zwei Basislängen Bl, der zweite Modul 17 eine Breite M von vier Basislängen, der dritte, vierte und fünfte Modul 18, 19 bzw. 20 eine Breite gleich einer Basislauflänge Bl und der sechste Modul 21 eine Breite gleich zwei Basislauflängen auf. Das Zeichen 25 besteht aus sechs Moduln und hat eine Länge gleich 11 Basislauflängen. Die größte Modulbreite, die zugelassen ist, entspricht vier Basislauflängen.

Der Code 11 wird von einem der Anschaulichkeit halber über ihm angedeuteten Abtastlichtfleck 13 in Richtung des Pfeiles F von links nach rechts abgetastet. Nur beispielsweise sind einige weitere Positionen des Abtastlichtflecks 13 auf der durch ihn definierten Abtastlinie 38 bei 13', 13", 13''' gestrichelt wiedergegeben.

Nach Fig. 5 wird der Lichtfleck 13 durch einen Lichtscanner 14, dessen Grundaufbau dem nach der DE-PS-23 40 688 entsprechen kann, auf dem Code 11 erzeugt. Das von dem vom Abtastlichtfleck 13 getroffenen Bereich des Codes 11 rückgestreute Licht wird von einem Lichtempfänger 15 empfangen, an dessen Ausgang 24 ein elektrisches Signal entsteht, welches repräsentativ für das von dem vom Lichtfleck 13 getroffenen Teil des Codes 11 rückgestreute Licht ist. Dieses Ausgangssignal wird an eine Differenzierstufe 26 angelegt, die das Empfangssignal differenziert und vorzugsweise auch gleichrichtet.

Das differenzierte und gleichgerichtete Signal ist in Fig. 1 unterhalb des Codes 11 im gleichen Zeitmaßstab wiedergegeben. Aufgrund der endlichen Größe des Abtastlichtflecks 13 und der gegebenenfalls vorhandenen optischen Verzerrungen besteht das differenzierte Signal nicht aus Nadelimpulsen, sondern aus Einzelimpulsen 41 mehr oder weniger großer Breite und Höhe, die zudem relativ zu den tatsächlichen Grenzen der Moduln 16, 17, 18, 19, 20, 21 nach der einen oder anderen Seite verschoben sind.

Nach der Differenzierung haben die beim Übergang von dunklen Feldern auf helle Felder entstehenden Signale das entgegengesetzte Vorzeichen wie die beim Übergang von Hell nach Dunkel auftretenden Einzelimpulse, doch werden die negativen Einzelimpulse durch die Gleichrichtung in der Differenzierstufe 26 z.B. nach unten geklappt, so daß am Ausgang der Differenzierstufe 26 ein Impulsbild, wie es unterhalb des Codes 11 in Fig. 1 dargestellt ist, erhalten wird.

Von besonderer Bedeutung ist es, daß das tatsächlich am Ausgang der Differenzierstufe 26 erhaltene Impulsbild normiert wird, was bedeutet, daß die Gesamtlänge eines Zeichens 25 elf Basislauflängen Bl entspricht. Diese Normierung ist im Diagramm der Fig. 1 bereits berücksichtigt.

An die Differenzierstufe 26 schließt sich eine von einem Taktgenerator 28 beaufschlagte Zählstufe 27 an, welche z.B. die Zeit zwischen den Maxima zweier aufeinanderfolgenden Einzelimpulse 41 zählt. Bevorzugt ist jedoch zwischen die Differenzierstufe 26 mit Gleichrichtung und die Zählstufe 27 noch ein Schwellenwertglied 42 geschaltet, welches zu dem Zeitpunkt, wo die ansteigende oder abfallende Flanke eines Einzelimpulses 41 eine durch geeignete Einstellung des Schwellenwertes bestimmte Amplitude über- bzw. unterschreitet, ein Signal an die Zählstufe 27 abgibt, welches die laufende Zählung stoppt und für Speicherung des erreichten Zählerstandes in einem anschließenden Speicher 29 sorgt sowie einen neuen Zählvorgang der Zählstufe 27 auslöst. Durch die Zählung der Zeit als Vielfaches eines Grundtaktes eines Taktgebers 28 werden den einzelnen gemessenen kontinuierlich verteilten Längen diskrete Werte 43 zugeordnet. Das Zählergebnis ist in Fig. 1 wiedergegeben. Danach hat das Modul 16 eine gemessene Modulbreite M' von LL1=1,63 Basislauflängen, das Modul 17 von LL2=4,07 Basislauflängen, das Modul 18 von wieder LL3=1,63 Basislauflängen, das Modul 19 von LL4=0,95 Basislauflängen, das Modul 20 von LL5=1,09 Basislauflängen und das Modul 21 von LL 6= 1,63 Basislauflängen. Diese gemessenen Modulbreiten werden nach Fig. 5 in einem Speicher 29 abgelegt.

Von einem an den Speicher 29 angelegten Zwei-Modul-Auswahlstufe 30 werden nun nacheinander die gemessenen Modulbreiten von Paaren unmittelbar aufeinanderfolgender Module 16, 17; 17, 18; 18, 19; 19, 20 bzw. 20, 21 ausgewählt und in einer anschließenden Korrekturstufe 31 miteinander verglichen. Im folgenden wird das erste Modul eines ausgewählten Paares als a bezeichnet, das zweite Modul als b.

In der Korrekturstufe 31 sind für jedes vorkommende Paar von gemessenen Modulbreiten korrigierende Werte gespeichert, die zuvor empirisch durch die Abtastung bekannter Codes 11 des gleichen Charakters ermittelt wurden. Daher ist: bekannt, welchen Ausgabewert die Korrekturstufe 31 für ein bestimmtes Paar von gemessenen Modulbreiten benachbarter Module an ihrem Ausgang 39 bereitstellen muß, damit das Meßergebnis in der richtigen Richtung korrigiert wird.

Grundsätzlich könnte für jedes einzelne Paar der gemessenen Modulbreite aufeinanderfolgender Moduln jeweils ein Ausgabewert in der Korrekturstufe 31 gespeichert sein, was der Abspeicherung einer dreidimensionalen Funktion entspricht, auf deren X- und Y-Achse die gemessenen Modulbreiten des Paares der aufeinanderfolgenden Module aufgetragen sind und deren auf der Z-Achse abgelesener Wert der Korrekturwert ist.

Bevorzugt wird jedoch die Korrektur gemäß den Fig. 1 bis 4 systematisiert und dadurch wesentlich vereinfacht.

So ist in der Korrekturstufe 31 zunächst eine in Fig. 2 gezeigte Zugehörigkeitsfunktion E implementiert, welche für jede gemessene Modulbreite den Bruchteil der Zugehörigkeit zu den einzelnen ganzzahligen Modulbreitenwerten angibt und im Beispiel aus vier Komponenten EKOMP1 bis EKOMP4 besteht. Dies wird anhand der vom Zähler 1 festgestellten Modulbreite = 1,63 veranschaulicht. Auf der Abszisse der Zugehörigkeitsfunktion E nach Fig.2 sind die gemessenen Modulbreiten M' in Einheiten der Basislauflänge Bl auf der Ordinate die Werte der Komponenten EKOMP1-EKOMP4 der Zugehörigkeitsfunktion aufgetragen.

In Fig. 2 ist für jede im Code auftretende Modulbreite nur eine Komponente eingetragen; es ist jedoch auch möglich, eine Zugehörigkeitsfunktion mit weiteren, zusätzlichen Komponenten zu verwenden. Insbesondere ist es zur Erzielung einer besseren Korrektur vorteilhaft, nahe oberhalb der größten und nahe unterhalb der kleinsten Modulbreite jeweils eine weitere Komponente zur Zugehörigkeitsfunktion E hinzuzunehmen. Während es für die dargestellten Komponenten vorteilhaft ist, wenn sie eine bezüglich der im Code auftretenden Modulbreite symmetrische Form haben, kann es bei den zusätzlichen Komponenten vorteilhaft sein, eine unsymmetrische Form zu wählen. Die Form der Komponenten ist nicht auf den dargestellten Kurvenverlauf beschränkt und andere Kurvenformen sind denkbar. So kann z.B. eine Dreickform gewählt werden, wodurch ein Maximum nur an einer einzigen Stelle auftritt, das vorteilhafterweise bei einer im Code auftretenden Modulbreite liegt. Eine andere vorteilhafte Kurvenform ist eine Kurve, die innerhalb eines Intervalls um die Modulbreite einen Verlauf der Form $\sin(x)/x$ hat, aber es sind auch beliebige andere Kurvenformen oder Kombinationen von Kurvenformen denkbar.

Geht man auf der Abszisse des Diagramms von Fig. 2 bei der Modulbreite M' = 1,63 des Moduls 16 senkrecht nach oben, so stellt man auf der Ordinate den Bruchteil der Zugehörigkeit zu den Vielfachen der Basislauflänge fest. Zur ganzzahligen Modulbreite 1 ermittelt man so einen Bruchteil der Zugehörigkeit von 0,25 und zum Zweifachen der Basislauflänge den Zugehörigkeitsbruchteil 0,8. Der Bruchteil der Zugehörigkeit zu dem Dreifachen und Vierfachen der Basislauflängen ist jeweils gleich Null.

Die Zugehörigkeitsfunktion E ist nach Fig. 5 in vier Look-Up-Stufen LUTE1 bis LUTE4 zur Bestimmung der Korrekturwerte E1, E2, E3 bzw. E4 implementiert, d.h. daß in den LUTE1 bis LUTE4 die trapezförmigen Komponenten EKOMP1, EKOMP2, EKOMP3, EKOMP4 der Zugehörigkeitsfunktion E gemäß Fig. 2 abgespeichert sind.

Das Ergebnis E1 bis E4 wird von den Stufen LUTE1, LUTE2, LUTE3 und LUTE4 festgestellt. Die Ausgangssignale der vier Stufen sind unterhalb des ersten Moduls 16 des Diagramms in Fig. 1 mit E1 = 0,25, E2= 0,8, E3= 0 und E4=0 für das Meßergebnis bei Abtastung des Moduls 16 wiedergegeben. Diese Ausgangssignale entsprechen den vier Werten E1 bis E4, die die vier Komponenten EKOMP1 bis EKOMP4 der Zugehörigkeitsfunktion E an der Stelle der gemessenen Modulbreite M' = 1,63 annehmen.

In entsprechender Weise ermitteln die Look-up-Tables LUTE1 bis LUTE4 in späteren Schritten, bei denen die Korrekturstufe 31 von der Zwei-Modul-Auswahlstufe 30 beaufschlagt wird, die Zugehörigkeitsbruchteile für das Meßergebnis an den anderen Module 17, 18, 19, 20 und 21. Das Ergebnis dieser Auswertungen durch die LUTE1 bis LUTE4 ist jeweils unterhalb des betreffenden Moduls 17, 18, 19, 20 bzw. 21 in Fig.1 angegeben. Aus Fig. 1 ist ersichtlich, daß die Werte E1 bis E4 für die Module 16, 18 und 21 mit gleicher gemessener Modulbreite identisch sind, wie es bei einer eindeutigen Funktion zu erwarten ist.

Um nun nicht nur die Zugehörigkeitsbruchteile der einzelnen gemessenen Modulbreiten, sondern auch die optische Verzerrung eines Moduls b durch das vorangehende Modul a, und somit das Verhältnis der Breiten aufeinanderfolgender Module zu berücksichtigen, ist in der Korrekturstufe 31 nach Fig. 3 auch eine Korrekturfunktion K implementiert und zwar wiederum mittels Look-Up-Stufen LUTK1 bis LUTK3. Die Korrekturfunktion K ist ebenfalls eine Zugehörigkeitsfunktion, hat jedoch im Beispiel nur drei Komponenten. Diese drei Komponenten KKOMP1, KKOMP2, KKOMP3 der zweiten Zugehörigkeitsfunktion K sind in Fig. 3 wiedergegeben. Auf der Abszisse sind wiederum die gemessenen Modulbreiten M' in Einheiten der Basislauflänge Bl wiedergegeben; auf der Ordinate sind die drei Komponenten KKOMP1 bis KKOMP3 der Zugehörigkeitsfunktion K aufgetragen.

Im Ausführungsbeispiel nach Fig. 3 ist für Modulbreiten M', die kleiner als eine Basislauflänge sind, der Korrekturwert für alle Komponenten der Korrekturfunktion K identisch Null. Zwischen den Lauflängen 1 und 2, 2 und 3 sowie 3 und 4 zeigen die Komponenten KKOMP1, KKOMP2, KKOMP3 der zweiten Zugehörigkeitsfunktion K jeweils einen trapezförmigen Verlauf.

Wie schon im Fall der Zugehörigkeitsfunktion E ist die mögliche Form der zweiten Zugehörigkeitsfunktion, d. h. der Korrekturfunktion K, nicht auf den dargestellten Verlauf beschränkt, und auch die Zahl der Komponenten ist nicht auf die dargestellte Anzahl beschränkt. Vielmehr ist es möglich, mit dem Verfahren durch Hinzunahme weiterer Komponenten KKOMP eine präzisere Korrektur zu erzielen, wobei es zum Beispiel möglich ist, zu jedem im Code möglichen Paar von Modulbreiten eine separate Komponente zu verwenden.

Für den Modul 16 hat die Abtastvorrichtung eine Breite von 1,63 ermittelt, was nach dem Diagramm der Fig. 3 einen Korrekturwert K1 von 0,8 ergibt. Die übrigen beiden Korrekturwerte K2 und K3 sind gleich 0, wie man der Angabe unterhalb des Moduls 16 in Fig. 1 entnehmen kann.

Für den Modul 17 mit der gemessenen Modulbreite M' = 4,07 sind nach Fig. 3 alle drei Korrekturwerte K1 = K2 = K3 = 0, was in Fig. 1 unterhalb des Moduls 17 angegeben ist.

Die aus den Funktionen nach Fig. 3 jeweils ermittelten K-Werte, K1 bis K3, für die weiteren gemessenen Modulbreiten der Module 18, 19, 20 und 21 sind ebenfalls in Fig.1 zahlenmäßig wiedergegeben.

Nach Fig. 5 werden nun die von den Stufen LUTE1 bis LUTE4 und LUTK1 bis LUTK3 für sämtliche gemessenen Modulbreiten M' ermittelten Zugehörigkeitsbruchteile E1 bis E4 und die für sämtliche gemessenen Module mit Ausnahme des ersten ermittelten Korrekturwerte K1, K2 und K3 in einer algebraischen Verknüpfungsschaltung 32 so verknüpft, daß an deren Ausgang 39 für jeden Modul 16, 17, 18, 19, 20, 21 jeweils ein zum tatsächlichen Wert hin korrigierter Modulbreitenwert Mk erscheint. Die algebraische Verknüpfungsschaltung 32 ist Teil der Korrekturstufe 31 und umfaßt Speicher 33, 34, Verknüpfungsstufen 35 und 36, eine Auswertestufe 37 sowie einen Ausgang 39.

Eine sinnvolle Verknüpfung, bei der die gemessene Breite eines Moduls b entsprechend der gemessenen Breite eines vorhergehenden Moduls a korrigiert wird, kann mit der Abtastanordnung nach Fig. 5 im einzelnen wie folgt vorgenommen werden:

Die Zwei-Modul-Auswahlstufe 30 beaufschlagt die Korrekturstufe 31 mit einem Paar aufeinanderfolgender gemessener Modulbreitenwerte a und b. In der Korrekturstufe werden zunächst in den Stufen LUTE1 bis LUTE4 und LUTK1 bis LUTK3 die Werte E1a bis E4a, E1b bis E4b und K1b bis K3b festgestellt. Diese Werte werden in den Speichern 33 und 34 abgelegt, von denen der erste Speicher 33 die von den Stufen LUTE1 bis LUTE4 abgegebenen Bruchteile der Zugehörigkeit E1a bis E4a der ersten verarbeiteten Modulbreite a abspeichert und der zweite Speicher 34 die von den Stufen LUTE1 bis LUTE4 abgegebenen Bruchteile E1b bis E4b und Korrekturwerte K1b bis K3b der zweiten verarbeiteten Modulbreite b zeitweise abspeichert.

In einer ersten Verknüpfungsstufe 35 werden die Zugehörigkeitsbruchteile E1a bis E4a der ersten Moduibreite M' = LL1 aus dem Speicher 33 mit den Korrekturfaktoren K1b bis K3b der zweiten Modulbreite b aus dem Speicher 34 multiplikativ zu einem Ergebnis Z verknüpft, das aus acht einzelnen Werten besteht. Eine bevorzugte Möglichkeit der Berechnung dieser acht Parameter Z wird weiter unten explizit angegeben.

Das von der multiplikativen Verknüpfungsstufe 35 abgegebene Signal Z wird in einer zweiten Verknüpfungsstufe 36 mit den Zugehörigkeitsbruchteilen E1b, E2b, E3b, E4b der zweiten gemessenen Modulbreite b, die in Speicher 34 gespeichert wurden, verknüpft; eine bevorzugte Verknüpfung wird weiter unten explizit angegeben. Bei der Verknüpfung werden in der Verknüpfungsstufe 36 entsprechend den Z-Werten, die von den drei Korrekturfaktoren K1b, K2b und K3b beeinflußt sind, vier Auswerteparameter A1b, A2b, A3b und A4b ermittelt.

Die vier Auswerteparameter A1b bis A4b aus der Verknüpfungsstufe 36 werden an die Auswertestufe 37 gegeben. Hier wird aus den vier Auswerteparametern A1b bis A4b die neue, korrigierte Modulbreite MK des Moduls b bestimmt. Die vier Auswerteparameter A1b bis A4b stellen analog zu E1b bis E4b den Zugehörigkeitsbruchteil zu der korrigierten Modulbreite b dar. Während also in den Stufen LUTE1 bis LUTE4 und LUTK1 bis LUTK3 zu gegebenen Modulbreiten die Zugehörigkeitsbruchteile bestimmt wurden, erfolgt in der Auswertestufe 37 der inverse Schritt; hier wird mehreren Zugehörigkeitsbruchteilen, nämlich den Auswerteparametern A1b bis A4b, ein einzelner Wert zugeordnet; demgemäß ist in der Auswertestufe 37 eine Umkehrfunktion einer Zugehörigkeitsfunktion implementiert.

Eine mögliche, in der Auswertestufe 37 algebraisch implementierbare Auswertefunktion ist in Fig.4 geometrisch veranschaulicht. Die Figur 4 zeigt, wie aus den vier Auswerteparametern A1b bis A4b ein einzelner, korrigierter Modulbreitenwert MK berechnet werden kann:

Jedem Zugehörigkeitsbruchteil A1b bis A4b zu einem zu betrachtenden Vielfachen der Basislauflänge, hier dem Ein- bis Vierfachen der Basislauflänge, wird ein gleichschenkliges Dreieck zugeordnet; der Mittelpunkt dieses Dreiecks liegt über dem betrachteten Vielfachen, die Höhe entspricht dem Wert des Zugehorigkeitsbruchteils und die Breite ist durch den Abstand des betrachteten Vielfachen zum nachstliegenden Vielfachen gegeben. Der Flachenschwerpunkt aus allen erhaltenen Dreiecksflächen liegt über dem gesuchten Ergebnis. Bei dem Beispiel in Figur 4 ist A1b = 0,7; A2b= 0,4; A3b=A4b=0. Die Zugehörigkeitswerte A1b und A2b, 0,7 bzw. 0,4 werden den ganzzahligen Modulbreitenwerten 1 bzw. 2 zugeordnet, und es werden von den betreffenden Diagrammpunkten gleichschenkliger Dreiecke der Hohe 0,7 bzw. 0,4 zu den benachbarten ganzzahligen Modulbreitenwerten aufgespannt. Der gemeinsame Flachenschwerpunkt S dieser Dreiecke liegt über dem Wert der korrigierten Modulbreite b von 1,34 auf der Abszisse. Die algebraische Implementierung dieser geometrischen Veranschaulichung ist weiter unten explizit angegeben.

Dabei ist die Auswertefunktion wie die Funktionen E und K wiederum in der Form und der Anzahl der Komponenten nicht beschränkt auf das dargestellte Beispiel und es kann sich insbesondere durch die Hinzunahme von zusätzlichen Komponenten zu den Funktionen E und K ein größerer Satz von Zugehörigkeitsbruchteilen A ergeben.

Das Ergebnis der Auswertestufe 37, d.h. die korrigierte Modulbreite wird an den Ausgang 39 gegeben. Ihm folgt eine weitere Auswertestufe 40, in der die korrigierten Modulbreiten wieder gruppenweise zusammengefaßt werden, um das zu erkennende Zeichen des Codes zu bestimmen. Dies kann dadurch geschehen, daß die korrigierte Modulgruppe z.B. nach dem oben beschriebenen Verfahren ausgewertet wird, also nach dem Schwellwertverfahren; es ist jedoch auch möglich, die bereits korrigierten Modulbreitenwerte ein weiteres Mal über einen Speicher wie den Speicher 29 und eine Zweimodulauswahlstufe wie die Zweimodul-Auswahlstufe 30 an eine Korrekturstufe wie die Korrekturstufe 31 zu geeben, um einen weiteren Korrekturdurchgang zu erhalten und so eine iterative Korrektur vorzunehmen. Es ist somit möglich, die korrigierten Modulbreitenwerte wiederum an Verknüpfungsschaltungen zu geben, die ähnlich wie die Verknüpfungsschaltung 32 aufgebaut ist, in der aber unterschiedliche Funktionen implementiert sein können.

Ein konkretes Rechenbeispiel für die Auswertung der Messung am Zeichen 25 nach Fig. 1 in der algebraischen Verknupfungsschaltung 32 nach Fig. 5 unter Berücksichtigung der Funktionen nach den Fig. 2, 3 und 4 und der aus Fig. 1 entnehmbaren gemessenen Modulbreiten M' = LL1, LL2, LL3, LL4, LL5 bzw. LL6 wird im folgenden wiedergegeben:

In dem Beispiel bedeuten $LL_{alt}$ die in Fig. 1 nicht gezeigte gemessene Breite des Moduls vor dem Modul 16, von dem noch ein Teil zu erkennen und der mit 23 bezeichnet ist (weiter oben war angenommen worden, daß es sich bei "23" um eine vor dem Beginn des Codes 11 vorgesehene Weißfläche handelt; vorliegend wird im Gegensatz dazu davon ausgegangen, daß "23" der letzte Modul eines vorangehenden Zeichens ist). LL1, LL2, LL3, LL4, LL5 und LL6 sind die gemessenen Breiten M' der Module 16, 17, 18, 19, 20, 21. Wie in Fig. 1 für die Module 16, 17, 18, 19, 20, 21 angegeben, ist das Modulbreitenmeßergebnis in bereits normierter Form, wie es im Speicher 29 abgelegt wird, wie folgt:

| voriger | Modul | $LL_{alt}$ | = 1,02 |
|---------|----------|-------|--------|
| | Modul 16 | LL1 | = 1,63 |
| | Modul 17 | LL2 | = 4,07 |
| | Modul 18 | LL3 | = 1,63 |
| | Modul 19 | LL4 | = 0,95 |
| | Modul 20 | LL5 | = 1,09 |
| | Modul 21 | LL6 | = 1,63 |

Es wird nun an Hand eines Beispieles gezeigt, wie die gemessenen Modulbreitenwerte korrigiert werden können.

Beispiel 1

Hier erfolgt eine Korrrektur der gemessenen Modulbreite 16, LL1 durch die Berücksichtigung der Verzerrung, die von der vorhergehenen Modulbreite $LL_{alt}$ hervorgerufen wird. In Fig. 5 hat man sich a als durch $LL_{alt}$ und b als durch LL1 ersetzt zu denken.

In LUTE1 bis LUTE4 wird der Parametersatz E1a bis E1b, d.h. $\{E(LL_{alt})\}$, nachgesehen, der dann im Speicher 33 Parametersatz $\{E(LL_{alt})\}$ wie folgt gespeichert wird:

$E1a = E1(LL_{alt}) = 1,0$
$E2a = E2(LL_{alt}) = 0$
$E3a = E3(LL_{alt}) = 0$
$E4a = E4(LL_{alt}) = 0$

Im Speicher 34 werden die analogen Parametersätze E1b bis E4b sowie K1b bis K3b, d.h. $\{E(LL1)\}$ bzw. $\{K(LL1)\}$ gespeichert:

| | |
|---|---|
| E1b=E1(LL1) = 0,3 | K1b=K1(LL1) = 0,9 |
| E2b=E2(LL1) = 0,67 | K2b=K2(LL1) = 0 |
| E3B=E3(LL1) = 0 | K3b=K3(LL1) = 0 |
| E4b=E4(LL1) = 0 | |

In der Verknüpfungsstufe 35 werden die Parametersatze $\{E(LL_{alt})\}$ und $\{K(LL1)\}$ verknüpft. Das Ergebnis dieser Verknupfung ist ein Parametersatz Z, der in der Verknüpfungsschaltung 36 zur Berechnung der vier Auswerteparameter A1b bis A4b dient. Wie weiter unten gezeigt ist, sind für die Berechnung jedes Auswerteparameters 2 Z-Parameter erforderlich. Bei vier Auswerteparametern A1b bis A4b sind also acht Z-Parameter nötig. Diese acht Parameter werden als $Z1_1$, $Z1_2$, $Z2_1$, $Z2_2$, $Z3_1$, $Z3_2$, $Z4_1$, $Z4_2$ bezeichnet. Sie werden berechnet, indem zuerst ein Zwischenschritt ausgeführt wird:

| allgemein | konkretes Beispiel |
|---|---|
| $E1(LL_{alt})*K1(LL1) = Z2_1$ | $1,0*0,9 = 0,9$ |
| $E_1(LL_{alt})*K2(LL1) = Z3_{11}$ | $1,0*0,0 = 0$ |
| $E_2(LL_{alt})*K2(LL1) = Z3_{12}$ | $0,0*0,0 = 0$ |
| $E1(LL_{alt})*K3(LL1) = Z4_{11}$ | $1,0*0,0 = 0$ |
| $E2(LL_{alt})*K3(LL1) = Z4_{12}$ | $0,0*0,0 = 0$ |
| $E3(LL_{alt})*K3(LL1) = Z4_{13}$ | $0,0*0,0 = 0$ |
| $E4(LL_{alt})*K1(LL1) = Z1_{21}$ | $0,0*0,9 = 0$ |
| $E3(LL_{alt})*K1(LL1) = Z1_{22}$ | $0,0*0,9 = 0$ |
| $E2(LL_{alt})*K1(LL1) - = Z1_{23}$ | $0,0*0,9 = 0$ |
| $E4(LL_{alt})*K2(LL1) = Z2_{21}$ | $0,0*0,0 = 0$ |
| $E3(LL_{alt})*K2(LL1) = Z2_{22}$ | $0,0*0,0 = 0$ |
| $E4(LL_{alt})*K3(LL1) = Z3_2$ | $0,0*0,0 = 0$ |

Aus diesen Zwischenwerten ergeben sich die gewünschten acht Z-Parameter nach :

| | |
|---|---|
| $Z1_1 = 0$ | $Z1_1 = 0$ |
| $Z2_1 =$ wie oben definiert | $Z2_1 = 0,9$ |
| $Z3_1 =$ Maximum $(Z3_{11}, Z3_{12})$ | $Z3_1 = 0$ |
| $Z4_1 =$ Maximum $(Z4_{11}, Z4_{12}, Z4_{13})$ | $Z4_1 = 0$ |

und

| | |
|---|---|
| $Z1_2 = 0$ | $Z1_2 = 0$ |
| $Z2_2 =$ Maximum $(Z2_{21}, Z2_{22})$ | $Z2_2 = 0$ |
| $Z3_2 =$ wie oben definiert | $Z3_2 = 0$ |
| $Z4_2 = 0$ | $Z4_2 = 0$ |

In der Verknüpfungsschaltung 36 werden nun die Zwischenparameter, die die Korrekturinformation enthalten, mit den Eingangsparametern der zu korrigierenden gemessenen Modulbreite verrechnet, um die vier Auswerteparameter A1b bis A4b für die Bestimmung der korrigierten Modulbreite des Moduls b zu erhalten:

| allgemein | Beispiel |
|---|---|
| $A1b = (Z1_1 + Z1_2 + E1(LL1))/3$ | $A1b=0,1$ |
| $A2b = (Z2_1 + Z2_2 + E2(LL1))/3$ | $A2b=0,53$ |
| $A3b = (Z3_1 + Z3_2 + E3(LL1))/3$ | $A3b=0$ |
| $A_4b = (Z4_1 + Z4_2 + E4(LL1))/3$ | $A4b=0$ |

Aus dem so berechneten vier Ausgangsparametern A1b bis A4b wird nun nach Fig.4 in der Stufe 37 die korrigierte Lauflänge Mk des Moduls 16 ermittelt, wobei als algebraische Umsetzung der in Fig. 4 gegebenen geometrischen Veranschaulichung die folgende Auswerteformel verwendet wird:

$$Mk= (A1b*1 + A2b*2 + A3b*3 + A4b*4) / (A1+A2+A3+A4)$$

In Zahlen ergibt sich für das Beispiel:

$$MK= (0,1*1+ 0,523*2+ 0*3 +0*4)/ (0,1+0,523+0+0) = 1,839.$$

Damit wird der Wert des Moduls 16 vom gemessenen Wert 1,632 auf den korrigierten Wert 1,839 korrigiert.

Beispiel 2:

Hier werden die nacheinander gemessenen Modulbreiten der Moduln 16, 17 analog zum Beispiel 1 ausgewertet. Bei den Werten LL1 und LL2 handelt sich um die aus den Fig. 1 und 5 ersichtlichen gemessenen Modulbreiten a und b.

Im Speicher 33 werden die Zugehörigkeitsbruchteile E1a bis E4a als Parametersatz {E(LL1)} gespeichert:

E1(LL1) - 0,3
E2(LL1) = 0,67
E3(LL1) = 0
E4(LL1) = 0

Im Speicher 34 werden analog die Zugehorigkeitsbruchteile E1b bis E4b als Parametersatz {E(LL2)} und die Korrekturwerte K1b bis K3b als Parametersatz {K(LL2)} gespeichert:

| | |
|---|---|
| E1(LL2) = 0 | K1(LL2) = 0 |
| E2(LL2) = 0 | K2(LL2) = 0 |
| E3(LL2) = 0 | K3(LL2) = 0 |
| E4(LL2) = 1,0 | |

Da die Korrekturwerte K1b, K2b und K3b sämtlich Null sind, beträgt der Wert aller acht Zwischenparameter Z unabhängig von {E(LL1)} ebenfalls Null. Damit entspricht der Auswerteparametersatz {A}, d.h. die Werte A1b bis A4b, dem Zugehörigkeitsbruchteilesatz {E(LL2)}, d.h. E1b bis E4b. Das muß auch so sein, da die gemessene Modulbreite LL2 mit einem Wert von 4,07 nicht verzerrt ist. Die korrigierte Modulbreite berechnet sich nach der obigen Auswerteformel damit ebenfalls zu:
MK(LL2)=4,07

Beispiel 3:

Hier werden jetzt die gemessenen Modulbreiten der Moduln 17, 18 ausgewertet. Hierzu man sich in Fig. 5 a durch LL2 und b durch LL3 ersetzt denken. Im Speicher 33 werden die Werte E1a bis E4a als Parametersatz {E(LL2)} gespeichert:

E1(LL2) = 0
E2(LL2) = 0
E3(LL2) = 0
E4(LL2) = 1,0

Im Speicher 34 werden die Zugehörigkeitsbruchteile E1b bis E4b als Parametersatz {E(LL3)} und die Korrekturwerte K1b bis K3b als Parametersatz {K(LL3)} gespeichert:

| | |
|---|---|
| E1(LL3) = 0,3 | K1(LL3) = 0,9 |
| E2(LL3) = 0,67 | K2(LL3) = 0 |
| E3(LL3) = 0 | K3(LL3) = 0 |
| E4(LL3) = 0 | |

Das Einsetzen dieser Werte in die unter Beipiel 12 angegeben Formeln liefert eine korrigierte Modulbreite von MK(LL3)= 1,358.

Zu beachten ist hier, daß der gemessene Modulbreitenwert der Module 16 und 18 mit 1,63 für bei Module identisch ist. Die Breite der jeweils vorangehenden Module ist jedoch unterschiedlich; das in Figur 1 nicht vollständig gezeigte, dem Modul 16 vorangehende Modul hat eine Breite von 1,02 und ist somit schmaler als Modul 16. Das dem Modul 18 vorangehende Modul 17 hat eine Breite von 4,07 und ist somit breiter als Modul 18. Diese Unterschiede der vorangehenden Module führen trotz der für die Module 16 und 18 gleichen gemessenen Modulbreiten zu unterschiedlichen Werten der korrigierten Modulbreiten, nämlich zu Werten von 1,84 bzw. 1,36. Damit ist die optische Verzerrung der Module durch das vorhergehende Modul korrigiert.

Die vorstehend genannten Beispiele geben nur einen von vielen denkbaren Fällen wieder. Das Beispiel des Zeichens 25 nach Fig. 1 enthält aber drei typische Fälle, wie sie immer wieder vorkommen, nämlich, daß eine geringe Modulbreite eine große Modulbreite verzerrt (Beispiel 1), eine große Modulbreite eine geringe Modulbreite verzerrt (Beispiel 3) und daß keine Verzerrung auftritt (Beispiel 2). Die Rechengänge für die anderen Modulbreiten-Paare sind analog. Mit der vorstehend angegebenen Minimalkonfiguration sind tatsächlich alle anderen normierten Lauflängenverhältnisse erfaßbar.

Bezugszeichenliste

| | |
|---|---|
| 11 | Code |
| 12 | Abtastvorrichtung |
| 13 | Abtastlichtfleck |
| 14 | Lichtsender |
| 15 | Lichtempfänger |
| 16 | Modul |
| 17 | " |
| 18 | " |
| 19 | " |
| 20 | " |
| 21 | " |
| 22 | " |
| 23 | Modul bzw. Weißfläche |
| 24 | Ausgang |
| 25 | Zeichen |
| 26 | Differenzierstufe |
| 27 | Zählstufe |
| 28 | Taktgenerator |
| 29 | Speicher |
| 30 | Zwei-Modul-Auswahlstufe |
| 31 | Korrekturstufe |
| 32 | Verknüpfungsschaltung |
| 33 | erster Speicher |
| 34 | zweiter Speicher |
| 35 | erste Verknüpfungsstufe |
| 36 | zweite Verknüpfungsstufe |
| 37 | Auswertestufe |
| 38 | Abtaststrich |
| 39 | Ausgang |
| 40 | Auswertestufe |
| 41 | differenzierte, gleichgerichtete Einzelimpulse |
| 42 | Schwellenwertglied |
| 43 | diskreter Bruchteil der Basislauflänge |

**Patentansprüche**

1. Verfahren zur Identifizierung eines aus aufeinanderfolgenden, jeweils einen aus einem nach oben begrenzten ganzzahligen Vielfachen von Basislauflängen (B1) zu einer Modulbreite (M) zusammengesetzten Modul (16, 17, 18, 19, 20, 21, 22) bildenden,hellen und dunklen Feldern bestehenden Codes (11), in welchem eine vorbestimmte Anzahl aufeinanderfolgender Moduln (16, 17, 18, 19, 20, 21) und Basislauflängen (B1) ein Zeichen (25) bilden, mittels einer optischen Abtastvorrichtung (12), welche mittels eines Lichtsenders (14) einen Lichtfleck (13), dessen Ausdehnung höchstens nur wenig und äußerstenfalls um das 1,5-fache größer als die Basislauflänge (B1) des Codes (11) ist, nacheinander über die Module (16, 17, 18, 19, 20, 21, 22) führt und mittels eines Lichtempfängers (15) das von den vom Lichtfleck (13) getroffenen Bereichen des Codes (11) rückgestreute Licht empfängt und an ihrem Ausgang (24) ein entsprechendes elektrisches Signal abgibt, welches differenziert sowie gleichgerichtet wird, um eine Folge von mehr oder weniger schmalen, jeweils einer Modulgrenze zugeordneten Einzelimpulsen (41) zu erhalten, wobei die Zeit, zu der die aufsteigenden oder abfallenden Flanken eine vorbestimmte Höhe

ereichen, die gemessenen Grenzen der Module (16, 17, 18, 19, 20, 21) definieren und die Grenzen zu dem Zeichen (25) entsprechenden Gruppen zusammengefaßt werden, worauf jede einem Zeichen entsprechende Gruppe in ihrer zeitlichen Länge normiert und der zeitliche Abstand der benachbarten Grenzen, d.h. die Modulbreite in Einheiten der Basislauflänge (B1) festgestellt und aus den so ermittelten gemessenen Modulbreiten (M') auf das tatsächliche Aussehen des Codes (11) geschlossen wird, indem davon ausgegangen wird, daß jede tatsächliche Modulbreite (M) nur ein ganzzahliges endliches Vielfaches der Basislauflänge (B1) sein kann,
**dadurch gekennzeichnet, daß**
die gemessenen Modulbreiten korrigiert werden, indem ein Korrekturschritt durchlaufen wird, in dem mindestens einmal jeweils die gemessenen Modulbreiten (M') zweier aufeinanderfolgender Module (16, 17, 18, 19, 20, 21) dadurch verglichen werden, daß aus einer Menge von vorher für alle vorkommenden Kombinationen aufeinanderfolgender Module (16, 17, 18, 19, 20, 21) anhand bekannter Zeichen festgelegten Korrekturwerten, welche so festgelegt sind, daß Fehlzuordnungen von gemessenen zu tatsächlichen Modulbreiten (M', M) entgegengewirkt wird, der für die Kombination dieser zwei aufeinanderfolgenden Module (16, 17, 18, 19, 20, 21) geltende Korrekturwert bestimmt und die gemessene Breite des ersten und/oder zweiten der beiden aufeinanderfolgenden Module (16, 17, 18, 19, 20, 21) entsprechend korrigiert wird.

2. Verfahren nach Anspruch 1, **dadurch gekennzeichnet, daß** die Ausdehnung des Lichtflecks (13) kleiner als die Basisauflänge (B1) ist und/oder daß die Abtastvorrichtung den Lichtfleck (13) periodisch nacheinander über die Module (16, 17, 18, 19, 20, 21, 22) führt und/oder daß dem einzelnen Modul (16, 17, 18, 19, 20, 21) derjenige tatsächliche Modulbreitenwert zugeordnet wird, der dem korrigierten Modulbreitenwert (Mk) am nächsten liegt und/oder daß die vorbestimmte Höhe auf der Flanke einen vorzugsweise größeren Anteil der Höhe entspricht und durch die absolute Höhe des Einzelimpulses oder durch eine mittlere Höhe einer Vielzahl von Impulsen festgelegt ist.

3. Verfahren nach einem der vorhergehenden Ansprüche, **dadurch gekennzeichnet, daß** die korrigierten Werte durch Mittelung über wiederholte Abtastungen des Codes gebildet werden und/oder daß die gemessenen Werte iterativ korrigiert werden und/oder daß jedem Paar gemessener Modulbreiten ein durch Ausmessung bekannter Zeichen ermittelter Korrekturwert zugeordnet wird und/oder daß alle gemessenen Modulbreiten (M') in diskrete Bruchteile der Basislauflänge (B1) unterteilt werden.

4. Verfahren nach einem der vorhergehenden Ansprüche, **dadurch gekennzeichnet, daß** zur Gewinnung von Korrekturwerten empirisch eine erste Zugehörigkeitsfunktion (E) aufgestellt wird, welche für jede gemessene Modulbreite (M') die Bruchteile (E1, E2, E3, E4) der Zugehörigkeit zu vorbestimmten Modulbreiten, insbesondere zu den ganzzahligen Vielfachen der Basislauflängen (B1) angibt, wobei das maximale Vielfache wenigstens gleich der Modulbreite des längsten im Code (11) vorkommenden Moduls (17), vorzugsweise jedoch nur ein bis zwei Basislauflängen größer als diese ist, und/oder daß zur Gewinnung von Korrekturwerten empirisch anhand bekannter Module eine zweite Zugehörigkeitsfunktion (K) aufgestellt wird, welche für jede gemessene Modulbreite (M') Korrekturwerte (K1, K2, K3) angibt, welcher der Abweichung der gemessenen Modulbreite von der nächstliegenden ganzzahligen Modulbreite Rechnung tragen, und/oder daß die Korrekturwerte (K1, K2, K3) mit der Abweichung der gemessenen Modulbreite (M') von der Ganzzahligkeit größer werden und vorzugsweise im Bereich maximaler Abweichung einen konstanten Maximalbereich umfaßt.

5. Verfahren nach einem der vorhergenden Ansprüche, **dadurch gekennzeichnet, daß** aus der gemessenen Breite (M') des ersten Moduls (16) eines Codes oder des ersten Moduls (16) eines Zeichens (25) nur die Bruchteile (E1, E2, E3, E4) der ersten Zugehörigkeitsfunktion (E) gebildet werden und/oder daß aus der gemessenen Breite (M') der dem ersten folgenden Moduln (17, 18, 19, 20, 21) sowohl die Bruchteile (E1, E2, E3, E4) der ersten Zugehörigkeitsfunktion (E) als auch die Korrekturwerte (K1, K2, K3) der zweiten Zugehörigkeitsfunktion (K) gebildet werden und/oder daß jeweils die Bruchteile (E1, E2, E3, E4) und Korrekturwerte (K1, K2, K3) einer bestimmten gemessenen Modulbreite (M') mit den Bruchteilen (E1, E2, E3, E4) der vorangehenden gemessenen Modulbreite derart verknüpft werden, daß korrigierte Modulbreiten (Mk) erhalten werden, die den tatsächlichen Modulbreiten (M) näherliegen als die ursprünglich gemessene Modulbreite (M').

6. Verfahren nach Anspruch 4 oder 5, **dadurch gekennzeichnet, daß** die Komponenten (EKOMP) der ersten Zugehörigkeitsfunktion (E) außerhalb jeweils eines vorzugsweise symmetrisch um die zu betrachtenden Vielfachen der Basislauflängen herum liegenden Intervalle endlicher Länge von vorzugsweise weniger als oder gleich dem Zweifachen der Basislauflänge geringe Beträge haben und innerhalb des jeweiligen Intervalls zunächst mit vorzugsweise endlichen Steigungen ansteigen, ein Maximum annehmen und im Anschluß daran bis zu den jeweiligen Enden des Intervalls abfallen, und/oder daß die Komponenten (EKOMP) der ersten Zugehörigkeitsfunktion (E) ihren jeweils maximalen Wert bei einem ganzzahligen Vielfachen der Basislauflänge annehmen und/oder daß mindestens eine Komponente (EKOMP) der ersten Zugehörigkeitsfunktion (E) den maximalen Wert nur an einem einzigen, diskreten Vielfachen der Basislauflänge annimmt und/oder daß mindestens eine Komponente (EKOMP) der ersten Zugehörigkeitsfunktion (E) den maximalen Wert über einen Bereich der Basislauflänge endlicher Breite annimmt und/oder daß die erste Zugehörigkeitsfunktion (E) zu jeder im Code auftretenden Modulbreite eine Komponente aufweist.

7. Verfahren nach Anspruch 6, **dadurch gekennzeichnet, daß** die erste Zugehörigkeitsfunktion (E) zu jeder im Code auftretenden Modulbreite eine Komponente und zusätzlich zwei weitere Komponenten mit Maxima aufweist, die an Basislauflängen oberhalb und unterhalb der größten bzw. kleinsten im Code auftretenden Modulbreite angenommen werden, wobei die Komponente, die ihr Maximum an einer Basislauflänge unterhalb der kleinsten im Code auftretenden Modulbreite hat, dieses Maximum zwischen der Hälfte der kleinsten im Code auftretenden Modulbreite und der kleinsten im Code auftretenden Modulbreite annimmt und die Komponente, die ihr Maximum an einer Basislauflänge oberhalb der größten im Code auftretende Modulbreite aufweist, dieses Maximum zwischen dieser größten auftretenden Modulbreite und der um ein ganzzahliges Vielfaches der Basislauflänge erhöhten größten auftretenden Modulbreite annimmt, und/oder jede ihr Maximum bei einer im Code auftretenden Modulbreite annehmende Komponente der ersten Zugehörigkeitsfunktion (E) innerhalb eines endlichen Intervalls Basislauflänge einen symmetrischen Verlauf hat, wobei dieses Intervall um die Modulbreite herum liegt, an der die betrachtete Komponente ihr Maximum annimmt, und/oder daß jede ihr Maximum nicht bei einer im Code auftretenden Modulbreite annehmende Komponente der ersten Zugehörigkeitsfunktion (E) einen unsymmetrischen Verlauf hat und/oder daß die Steigung mindestens einer der Komponenten der ersten Zugehörigkeitsfunktion vom Beginn eines Intervalls, das um die Basislauflänge herum liegt, an der die betrachtete Komponente ihr Maximum annimmt, bis zu einem Maximum linear ist und daß der dem Maximum folgende Abfall der Komponente bis an den Rand des Intervalls ebenfalls linear ist.

8. Verfahren nach einem der Ansprüche 4 bis 8, **dadurch gekennzeichnet, daß** die Komponenten der ersten Zugehörigkeitsfunktion innerhalb von Intervallen, die um jene Vielfachen der Basislauflängen herum angeordnet sind, an denen die Komponenten ihr Maximum annehmen, einen Verlauf haben der Form:

$$\text{EKOMP(X)} = A + B * [\text{SIN(X)/X}]$$

wobei A eine vorzugsweise in der Nähe der reellen Zahl O und B eine vorzugsweise in der Nähe der reellen Zahl 1 liegende Konstante ist, und X mit reellen Zahlen C und D berechnet werden kann:

$$X = C * (\text{Modulbreite-D}),$$

wobei insebesondere die Größe D für jede Komponente der Zugehörigkeitsfunktion einen anderen Wert annehmen kann, und/oder daß die erste Zugehörigkeitsfunktion außerhalb der vorzugsweise symmetrisch um die zu betrachtenden Vielfachen der Basislauflängen herum liegenden Intervalle endlicher Länge von vorzugsweise weniger als oder gleich dem Zweifachen der Basislauflänge Null ist und/oder daß die Komponenten (KKOMP) zweite Zugehörigkeitsfunktion (K) innerhalb jeweils zwischen den betrachteten Vielfachen der Basislauflängen liegenden Intervallen zunächst mit vorzugsweise endlichen Steigungen ansteigen, ein Maximum annehmen und danach wieder mit vorzugsweise endlichen Steigungen abfallen und daß die Komponenten der zweiten Zugehörigkeitsfunktion (K) außerhalb dieser jeweiligen vorzugsweise symmetrisch um die zu betrachtenden Vielfachen der Basislauflängen herum liegenden Intervalle endlicher Länge von vorzugsweise weniger als dem Zweifachen der Basislauflänge geringe Beträge haben, und/oder daß die zweite Zugehörigkeitsfunktion (K) zwischen dem Nullfachen der Basislauflänge und dem Einfachen der Basislauflänge Null ist und/oder daß die Komponenten der zweiten Zugehörigkeitsfunktion außerhalb der Intervalle den Wert Null annehmen, und/oder daß der Anstieg der zweiten Zugehörigkeitsfunktion (K) bei den zu betrachtenden Vielfachen der Basislauflänge oder kurz dahinter beginnt und daß der Abstieg vor dem nächsten zu betrachtenden Vielfachen endet und/oder daß das Ende des Abstiegs mit zunehmendem zu betrachtendem Vielfachen der Basislauflänge in immer größerem Abstand vor dem zu betrachtenden ganzzahligen Vielfachen der Basislauflänge liegt und/oder daß die Anzahl der Komponenten der zweiten Zugehörigkeitsfunktion die Anzahl der möglichen Kombinationen von im Code auftretenden Modulbreiten nicht überschreitet und/oder daß die Steigung der Komponenten der zweiten Zugehörigkeitsfunktion im Bereich des Anstieges bzw. des Abfalles linear ist und/oder daß die Korrekturwerte (K1b, K2b, K3b) einer gemessenen Modulbreite (M') mit den Bruchteilen (Ela, E2a, E3a, E4a) der gemessenen Breite des vorangehenden, Moduls verknüpft werden, daß das Ergebnis dieser Verknüpfung (Z) mit den Bruchteilen (E1b, E2b, E3b, E4b) der gemessenen Modulbreite (M') verknüpft wird und daß das dadurch erhaltene zweite Verknüpfungsresultat (A1b, A2b, A3b, A4b) über eine Auswertefunktion (A) so gemittelt wird, daß die dem Mittelwert entsprechende korrigierte Modulbreite der tatsächlichen ganzzahligen Modulbreite (M) näherliegt als die ursprünglich gemessene Modulbreite (M'), und/oder daß die Auswertefunktion (A) aus Funktionen zusammengesetzt ist, die in um jedes zu betrachtende Vielfache der Basislauflänge symmetrisch liegenden Intervallen symmetrisch und mit linearer Änderung verlaufen, deren Maxima gleich dem Verknüpfungsresultat (A1, A2, A3, A4) sind und die bei einem benachbarten zu betrachtenden Vielfachen den Wert Null erreichen und daß die Mittelung der Auswertefunktion A durch die Berechnung des Schwerpunktes dieser Funktionen erfolgt.

9. Optische Abtastanordnung zur Ausführung des Verfahrens nach einem der vorhergehenden Ansprüche, mit einer optischen Abtastvorrichtung (12), welche mittels eines Lichtsenders (14) einen Lichtfleck (13), dessen Ausdehnung höchstens nur wenig größer als die Basislauflänge (B1), höchstens aber nur um das 1,5-fache größer als die Basislauflänge (B1) des Codes (11) ist, nacheinander über die Module (16, 17, 18, 19, 20, 21, 22) führt und mittels eines Lichtempfängers (15) das von den vom Lichtfleck (13) getroffenen Bereichen des Codes (11) rückgestreute Licht empfängt und an ihrem Ausgang (24) ein entsprechendes elektrisches Signal abgibt, wobei an den Lichtempfänger (15) eine Differenzierstufe (26) mit Gleichrichtung und eine Zählstufe (27) für die von einem Taktgenerator (28) zwischen jeweils zwei vorbestimmten Höhen der Flanken aufeinanderfolgender Einzelimpulse erzeugten Taktimpulse angeschlossen ist, sowie mit einem Speicher (29), in dem die einzelnen Zählergebnisse abgespeichert werden, **dadurch gekennzeichnet,**
**daß** eine Zweimodul-Auswahlstufe (30) vorgesehen ist, die jeweils die gemessene Breite (M') zweier aufeinanderfolgender Moduln in Einheiten der Basislauflänge (B1) erfaßt und an eine Korrekturstufe (31) abgibt, die jede Modulbreite entsprechend vorher für jedes Modulbreitenpaar dort abgelegter Korrekturwerte in Richtung der tatsächlichen Modulbreite (M) korrigiert und für jede gemessene Modulbreite (M') ein korrigiertes Modulbreitensignal abgibt.

10. Optische Abtastanordnung nach Anspruch 9, **dadurch gekennzeichnet, daß** die Ausdehnung des Lichtflecks (13) kleiner als die Basislauflänge (B1) ist und/oder daß die Abtastvorrichtung den Lichtfleck (13) periodisch nacheinander über die Module (16, 17, 18, 19, 20, 21, 22) führt und/oder daß die Korrekturstufe (31) für jede einem zu betrachtenden Vielfachen der Basislauflänge zugeordneten Komponente (EKOMP1, EKOMP2, EKOMP3, EKOMP4) einer ersten Zugehörigkeitsfunktion (E) eine Look-Up-Stufe (LUTE) enthält, in welcher diese Komponente abgelegt ist und welcher den entsprechenden Bruchteil (E1, E2, E3, E4) für das der gerade betrachteten gemessenen Modulbreite entsprechende angelegte Datenwort ermittelt, und oder daß die Korrekturstufe weiter für jede Komponente (KKOMP1, KKOMP2, KKOMP3) der zweiten Zugehörigkeitsfunktion (K) eine Look-Up-Stufe (LUTK) enthält, welcher den entsprechenden Korrekturwert (K1, K2, K3) für das der betrachteten gemessenen Modulbreite entsprechende, angelegte Datenwort ermittelt und/oder daß die Ausgänge der Look-Up-Stufen (LUTE; LUTK) an eine Verknüpfungsschaltung (32) angeschlossen sind und/oder daß die algebraische Verknüpfungsschaltung (32) zwei parallelgeschaltete Speicher (33, 34) zur zeitweisen Speicherung aller in den Look-Up-Stufen (LUTE) festgestellten Zugehörigkeitsbruchteile (Ela, E2a, E3a, E4a) der ersten gemessenen Modulbreite bzw. aller Zugehörigkeitsbruchteile (E1b, E2b, E3b, E4b) der zweiten gemessenen Modulbreite und Korrekturwerte (K1b, K2b, K3b) der zweiten gemessenen Modulbreite, eine an beide Speicher (33, 34) angelegte, eine erste Verknüpfungsstufe (35) zur Verknüpfung der Bruchteile (Ela, E2a, E3a, E4a) der ersten gemessenen Modulbreite mit den Korrekturwerten (K1b, K2b, K3b) der zweiten gemessenen Modulbreite, eine zweite, an die erste Verknüpfungsstufe (35) und den zweiten Speicher (34) angelegte weitere Verknüpfungsstufe (36), welche den Ausgang (Z) der ersten Verknüpfungsstufe (35) und die Bruchteile (E1b, E2b, E3b, E4b) der zweiten gemessenen Modulbreite so verknüpft, daß das Ergebnis (A1b, A2b, A3b, A4b) dieser Verknüpfung über die in einer Auswertestufe (37) implementierte Auswertefunktion (A) gemittelt wird, und daß die dem Mittelwert entsprechende korrigierte Modulbreite (Mk) der tatsächlichen ganzzahligen Modulbreite (M) näherliegt als die ursprünglich gemessene Modulbreite (Mb), und/oder daß die implementierte Auswertefunktion A aus Funktionen zusammengesetzt ist, die in um jedes zu betrachtende Vielfache der Basislauflänge symmetrisch liegenden Intervallen symmetrisch und mit linearer Änderung verlaufen, deren Maxima gleich dem Verknüpfungsresultat (A1b, A2b, A3b, A4b) sind und die bei einem benachbarten zu betrachtenden Vielfachen den Wert Null erreichen und/oder daß zwischen die Differenzierstufe (26) mit Gleichrichtung und die Zählstufe ein Schwellenwertglied (42) geschaltet ist, welches zu der Zeit, wo die ansteigenden bzw. abfallenden Flanken der einzelnen Pulse (41) eine vorbestimmte Amplitude über- bzw. unterschreiten, ein Rückstellsignal und Auslösesignal an die Zählstufe (27) abgibt.

**Claims**

1.  A method for the identification of a code (11) consisting of sequential light and dark fields which respectively form modules (16, 17, 18, 19, 20, 21, 22) put together from an upwardly restricted integral multiple number of base running lengths (B1) to a module width (M), with a predetermined number of sequential modules (16, 17, 18, 19, 20, 21) and base running lengths (B1) in the code forming a mark (25), by means of an optical scanning device (12) which, by means of a light transmitter (14), guides a light bead (13), the extent of which is at most only fractionally larger and at the extreme around 1.5 times greater than the base running length (B1) of the code (11) over the modules (16, 17, 18, 19, 20, 21, 22) in sequence and, by means of a light receiver (15), receives the light scattered back from the regions of the code (11) met by the light bead (13), and transmits a corresponding electrical signal at its output (24) which is differentiated and also rectified in order to receive a sequence of more or less narrow individual pulses (41) each associated with a module boundary, wherein the time at which the rising or falling flanks have reached a predetermined level define measured boundaries of the modules (16, 17, 18, 19, 20, 21) and the boundaries are combined into groups corresponding to the mark (25), whereupon each group corresponding to a mark is normed with respect to its temporal length and the time spacing of the neighbouring boundaries, i.e. the module width, is determined in units of the base running length (B1), and a conclusion is drawn regarding the actual appearance of the code (11) from the so derived measured module width (M') in that it is assumed that each actual module width (M) can only be an integral finite multiple of the base running length (B1), **characterised in that** the measured module widths are corrected **in that** a correction step is carried out in which in each case the measured module widths (M') of two sequential modules (16, 17, 18, 19, 20, 21) are compared at least once in such a way that the correction value which applies to the combination of these two sequential modules (16, 17, 18, 19, 20, 21) is determined from a quantity of correction values previously specified with respect to known marks for all the prevailing combinations of sequential modules (16, 17, 18, 19, 20, 21), with the correction values being so specified that faulty associations of the measured module widths to actual module widths (M', M) are counteracted and the measured width of the first and/or second of the two sequential modules (16, 17, 18, 19, 20, 21) is correspondingly corrected.

2.  Method in accordance with claim 1, **characterised in that** the extent of the light bead (13) is smaller than the base running length (B1); and/or **in that** the scanning means periodically guides the light bead (13) in sequence over the modules (16, 17, 18, 19, 20, 21, 22); and/or **in that** the actual module width value associated with the individual module (16, 17, 18, 19, 20, 21) is that one which comes closest to the corrected module width value (Mk); and/or **in that** the predetermined level on the flank corresponds to a preferably larger proportion of the height and is determined by the absolute height of the individual pulse or by an average height of a plurality of pulses.

3.  Method in accordance with any one of the preceding claims, **characterised in that** the corrected values are formed by averaging across repeated scans of the code; and/or **in that** the measured values are iteratively corrected; and/or **in that** correction value derived by the measurement of known marks is associated with each pair of measured module widths; and/or **in that** all measured module widths (M') are subdivided into discrete fractions of the base running length (B1).

4.  Method in accordance with any one of the preceding claims, **characterised in that** a first membership function (E) is set up empirically for obtaining correction values and recites for each measured module width (M') the fractions (E1, E2, E3, E4) of the membership to predetermined module widths, in particular to the integral multiples of the base running lengths (B1), with the maximum multiple being at least equal to the module width of the longest module (17) encountered in the code (11) and preferably being only one or two base running lengths greater than this module width; and/or **in that** for obtaining correction values empirically with respect to known modules a second membership function (K) is set up which recites correction values (K1, K2, K3) for each measured module width (M') which take account of the deviation of the measured module width from the next closest integral module width; and/or **in that** the correction values (K1, K2, K3) become larger with the deviation of the measured module width (M') from the integral value and preferably include a constant maximum region in the area of maximum deviation.

5.  Method in accordance with any one of the preceding claims, **characterised in that** only the fractions (E1, E2, E3, E4) of the first membership function (E) are formed from the measured width (M') of the first module (16) of a code or of the first module (16) of a mark (25); and/or **in that** both the fractions (E1, E2, E3, E4) of the first membership function (E) and also the correction values (K1, K2, K3) of the second membership function (K) are formed from the measured width (M') of the module (17, 18, 19, 20, 21) following the first module; and/or **in that** in each case the fractions (E1, E2, E3, E4) and correction values (K1, K2, K3) of a specific measured module width (M') are linked with the fractions (E1, E2, E3, E4) of the previously measured module width in such a way that corrected module widths (Mk) are obtained which lie closer to the actual module widths (M) than the originally measured module width (M').

6. Method in accordance with claim 4 or claim 5, **characterised in that** the components (EKOMP) of the first membership function (E) have small amounts outside of a respective interval of finite length which preferably lies symmetrically about the multiple of the base running length to be considered, with the length being preferably less than or the same as twice the base running length and **in that** the components (EKOMP) increase within the respective interval initially with preferably finite gradients, adopt a maximum and subsequently drop off up to the respective end of the interval; and/or **in that** the components (EKOMP) of the first membership function (E) each adopt their respective maximum value at an integral multiple of the base running length; and/or **in that** at least one component (EKOMP) of the first membership function (E) adopts the maximum value only at a single discrete multiple of the base running length; and/or **in that** at least one component (EKOMP) of the first membership function (E) adopts the maximum value over a region of the base running length of finite width; and/or **in that** the first membership function (E) has a component for each module width arising in the code.

7. Method in accordance with claim 6, **characterised in that** the first membership function (E) has a component for each module width arising in the code and additionally two further components with maxima which are assumed at base running lengths above and below the largest and smallest module width respectively arising in the code, wherein the component which has its maximum at a base running length beneath the smallest module width occurring in the code adopts this maximum between half of the smallest module width arising in the code and the smallest module width arising in the code, and wherein the component which has its maximum at a base running length above the largest module width arising in the code adopts this maximum between this largest arising module width and the largest arising module width increased by an integral multiple of the base running length; and/or **in that** each component of the first membership function (E) assuming its maximum at a module width arising in the code has a symmetrical shape within a finite interval of base running length, with this interval lying around the module width at which the component considered adopts its maximum; and/or **in that** each component of the first membership function (E) which does not adopt its maximum at a module width arising in the code has an asymmetrical shape; and/or **in that** the gradient of at least one of the components of the first membership function is linear from the start of an interval which lies around the base running length at which the considered component adopts its maximum up to a maximum; and **in that** the drop-off of the component following the maximum is likewise linear up to the edge of the interval.

8. Method in accordance with any one of claims 4 to 8, **characterised in that** the components of the first membership function have a shape of the form:

$$EKOMP(X) = A + B * [SIN(X)/X]$$

within intervals which are arranged around that multiple of the base running length at which the components have their maximum, with A being a constant which is preferably close to the real number 0 and, with B being a constant which is preferably close to the real number 1 and with X being computed with real numbers C and D in accordance with

$$X = C* (module\ width\ D),$$

wherein in particular the value D can adopt a different value for each component of the membership function; and/or **in that** the first membership function is zero outside of the interval of finite length or preferably less than or equal to twice the base running length which preferably lies symmetrically around the considered multiple of the base running lengths; and/or **in that** within respective intervals lying between the considered multiples of the base running lengths the components (KKOMP) of the second membership function (K) first increase with preferably finite gradients, adopt a maximum and then drop off again with preferably finite gradients; and **in that** outside of these respective intervals of finite length of preferably less than twice the base running length, which are preferably disposed symmetrically about the multiples of the base running lengths to be considered, the components of the second membership function (K) have small amounts; and/or **in that** the second membership function (K) is zero between 0 times the base running length and one times the base running length; and/or **in that** the components of the second membership function adopt the value zero outside of the intervals; and/or **in that** the increase of the second membership function (K) begins at the multiples of the base running length to be considered or shortly behind it and that the decrease ends before the next multiples to be considered; and/or **in that** the end of the decrease lies, with increasing multiples of the base length to be considered, at an always greater distance before the integral multiple of the base length to be considered; and/or **in that** the number of the components of the second membership function does not exceed the number of the possible combinations of module widths arising in the code; and/or **in that** the gradient of the components of the second membership function is linear in the rising and/or falling region; and/or **in that** the correction values (K1b, K2b, K3b) of a measured module width (M') are linked with the fractions (E1a, E2a, E3a, E4a) of the measured width of the preceding module; **in that** the result of this linking (Z) is linked with the fractions (E1b, E2b, E3b, E4b) of the measured module width (M') and **in that** the second linking result (A1b, A2b, A3b, A4b) obtained thereby is averaged via an evaluation function (A) such that the corrected module width corresponding to the average value lies closer to the actual integral module width (M) than the originally measured module width (M'); and/or **in that** the evaluation function (A) is put together from functions which extend symmetrically and with linear change in intervals which lie symmetrically around each multiple of the base running length to be considered, with the maxima of the functions being the same as the linking result (A1, A2, A3, A4) and achieving the value zero at an adjacent multiple which is to be considered; and **in that** the averaging of the evaluation function A takes place by the computation of the center of gravity of these functions.

9. Optical scanning apparatus for the carrying out of the method in accordance with any one of the preceding claims, comprising an optical scanning device (12), which by means of a light transmitter (14), guides a light bead (13), the extent of which is at most only fractionally larger and at the extreme around 1.5 times greater than the base running length (B1) of the code (11) over the modules (16, 17, 18, 19, 20, 21, 22) in sequence, and by means of a light receiver (15) which receives the light scattered back from the regions of the code (11) met by the light bead (13) and transmits a corresponding electrical signal at its output (24), wherein a differentiating stage (26) with rectification and a counting stage (27) for the clock pulses generated by a clock generator (28) between in each case two predetermined levels of the flanks of sequential individual pulses is connected to the light receiver (15) and with a memory (29) in which the individual counting results are stored, **characterized in that** a two modulus selecting stage (30) is provided, which respectively detects the measured width (M') of two sequential modules in units of the base running length (B1) and transmits them to a correction stage (31) which corrects each module width in the direction of the actual module width (M) in accordance with correction values which have previously been stored there for each module width pair and transmits a corrected module width signal for each measured module width (M').

10. Optical scanning arrangement in accordance with claim 9, **characterised in that** the extent of the light bead (13) is smaller than the base running length (B1); and/or **in that** the scanning apparatus periodically guides the light bead sequentially over the modules (16, 17, 18, 19, 20, 21, 22); and/or **in that** the correction stage (31) contains for each component (EKOMP1, EKOMP2, EKOMP3, EKOMP4) associated with a multiple of the base running length to be considered of a first membership function (E) a look-up stage (LUTE) in which this component is deposited and which derives the corresponding fraction (E1, E2, E3 and E4, respectively) for the applied data word corresponding to the measured module width being considered; and/or **in that** the correction stage further contains a look-up stage (LUTK) for each component (KKOMP1, KKOMP2, KKOMP3) of the second membership function (K) which determines the corresponding correction value (K1, K2, K3) for the applied data word corresponding to the considered measured module width; and/or **in that** the outputs of the look-up stages (LUTE; LUTK) are connected to a linking circuit (32); and/or **in that** the algebraic linking circuit (32) has two memories (33, 34) connected in parallel for the temporary storage of all membership fractions (E1a, E2a, E3a, E4a) determined in the look-up stages (LUTE) of the first measured module width and for all membership fractions (E1b, E2b, E3b, E4b) of the second measured module width and correction values (K1b, K2b, K3b) of the second measured module width, a first combining stage (35) applied to both memories (33, 34) for linking fractions (E1a, E2a, E3a, E4a) of the first measured module width with the correction values (K1b, K2b, K3b) of the second measured module width, a second further combining stage (36) connected to the first combining stage (35) and the second memory (34) and which links the output (Z) of the first combining stage (35) and the fractions (E1b, E2b, E3b, E4b) of the second measured module width, such that the result (A1b, A2b, A3b, A4b) of this linking is averaged via the evaluation function (A) implemented in an evaluation stage (37); and **in that** the corrected module width (Mk) corresponding to the average value lies closer to the actual integral module width (M) than the originally measured module width (Mb); and/or **in that** the implemented evaluation function (A) is put together from functions which extend symmetrically and with linear change in intervals which lie symmetrically about each multiple of the base running length to be considered, with the maxima of these intervals being the same as the linkage result (A1b, A2b, A3b, A4b) and attaining the value zero at a neighbouring multiple to be considered; and/or **in that** a threshold member (42) is connected between the differentiating stage (26) with rectification and the counting stage and transmits a resetting signal and a trigger signal to the counting stage (27) at the time at which the rising or falling flanks of the individual pulses (41) exceed or fall short of a predetermined amplitude.

**Revendications**

1. Procédé destiné à identifier un code (11) formé par des zones claires et obscures successives, formant chacune un module (16, 17, 18, 19, 20, 21, 22) structuré en une largeur de module (M) à partir d'un multiple entier, limité vers le haut, de longueurs de séquence de base (B1), dans lequel un nombre prédéfini de modules successifs (16, 17, 18, 19, 20, 21) et de longueurs de séquence de base (B1) forment un caractère (25), au moyen d'un dispositif de lecture optique (12), qui, au moyen d'un émetteur de lumière (14), balaye successivement sur les modules (16, 17, 18, 19, 20, 21, 22) un point lumineux (13), dont la dimension est au maximum seulement faiblement supérieure et, dans le cas extrême, 1,5 fois supérieure à la longueur de séquence de base (B1) du code (11), et qui, au moyen d'un récepteur de lumière (15), capte la lumière rétrodiffusée par les zones du code (11) ciblées par le point lumineux (13) et émet à leur sortie (24) un signal électrique correspondant, qui est dérivé et redressé pour obtenir une suite d'impulsions isolées (41) plus ou moins étroites, associées chacune à une limite de module, sachant que l'intervalle de temps, pendant lequel les flancs ascendants ou descendants atteignent une hauteur prédéfinie, définit les limites mesurées des modules (16, 17, 18, 19, 20, 21) et les limites sont rassemblées en groupes correspondant au caractère (25), à la suite de quoi chaque groupe correspondant à un caractère est standardisé en longueur de temps et la distance en temps entre les limites voisines, c'est-à-dire la largeur du module, est détectée en unités de longueurs de séquence de base (B1) et, à partir des largeurs de module mesurées (M') ainsi calculées, est déterminé par l'apparence réelle du code (11), dans lequel on suppose que chaque largeur de module réelle (M) ne peut être qu'un multiple entier fini de la longueur de séquence de base (B1),

   **caractérisé en ce que** les largeurs de module mesurées sont corrigées par l'intermédiaire d'une étape de correction, au cours de laquelle chacune des largeurs de module mesurées (M') de deux modules (16, 17, 18, 19, 20, 21) consécutifs sont comparées au moins une fois par le fait que, à partir d'une quantité de valeurs de correction déterminées précédemment à l'appui de caractères connus pour toutes les combinaisons de modules (16, 17, 18, 19, 20, 21) consécutifs apparaissant, lesquelles valeurs de correction sont définies de manière à réagir contre des associations erronées entre les largeurs de module mesurées (M') et les largeurs de module réelles (M), la valeur de correction applicable à la combinaison de ces deux modules (16, 17, 18, 19, 20, 21) consécutifs est déterminée et la largeur mesurée du premier et/ou du deuxième des deux modules (16, 17, 18, 19, 20, 21) consécutifs est corrigée en conséquence.

2. Procédé selon la revendication 1, **caractérisé en ce que** la dimension du point lumineux (13) est inférieure à la longueur de séquence de base (B1) et/ou **en ce que** le dispositif de lecture balaye périodiquement le point lumineux (13) successivement sur les modules (16, 17, 18, 19, 20, 21, 22), et/ou **en ce qu'**à chaque module (16, 17, 18, 19, 20, 21) est associée la valeur de la largeur de module réelle qui est la plus proche de la valeur de la largeur de module corrigée (Mk), et/ou **en ce que** la hauteur prédéfinie sur le flanc correspond de préférence à une plus grande part de la hauteur et est définie par la hauteur absolue de l'impulsion isolée ou par une hauteur moyenne d'une pluralité d'impulsions.

3. Procédé selon l'une des revendications précédentes, **caractérisé en ce que** les valeurs corrigées sont formées par le calcul de la moyenne des valeurs obtenues par des balayages répétés du code, et/ou **en ce que** les valeurs mesurées sont corrigées de manière itérative, et/ou **en ce qu'**à chaque couple de largeurs de module mesurées est associée une valeur de correction calculée à partir de la dimension de caractères connus, et/ou **en ce que** toutes les largeurs de module mesurées (M') sont subdivisées en fractions discrètes de la longueur de séquence de base (B1).

4. Procédé selon l'une des revendications précédentes, **caractérisé en ce que**, pour obtenir les valeurs de correction on définit de manière empirique une première fonction d'appartenance (E) qui indique pour chaque largeur de module mesurée (M') les fractions (E1, E2, E3, E4) de l'appartenance à des largeurs de module prédéterminées, en particulier à des multiples entiers des longueurs de séquence de base (B1), sachant que le multiple maximum est au moins égal à la largeur du plus long module (17) apparaissant dans le code (11), de préférence toutefois est seulement supérieur à celle-ci d'une valeur égale à une à deux longueurs de séquence de base, et/ou **en ce que** pour obtenir les valeurs de correction on définit de manière empirique une deuxième fonction d'appartenance (K) à l'appui de modules connus, laquelle indique pour chaque largeur de module mesurée (M') les valeurs de correction (K1, K2, K3), lesquelles tiennent compte de la divergence entre la largeur de module mesurée et la largeur de module entière la plus proche, et/ou **en ce que** les valeurs de correction (K1, K2, K3) augmentent en fonction de la divergence entre les largeurs de module (M') mesurées et le nombre entier et contiennent une zone maximale constante, de préférence dans le domaine de la divergence maximale.

5.  Procédé selon l'une des revendications précédentes, **caractérisé en ce que**, à partir de la largeur mesurée (M') du premier module (16) d'un code ou du premier module (16) d'un caractère (25), seules sont formées les fractions (E1, E2, E3, E4) de la première fonction d'appartenance (E), et/ou **en ce que**, à partir de la largeur (M') mesurée des modules (17, 18, 19, 20, 21) consécutifs au premier module, sont formées non seulement les fractions (E1, E2, E3, E4) de la première fonction d'appartenance (E), mais aussi les valeurs de correction (K1, K2, K3) de la deuxième fonction d'appartenance (K), et/ou **en ce que** les fractions (E1, E2, E3, E4) et les valeurs de correction (K1, K2, K3) d'une largeur de module définie mesurée (M') sont respectivement combinées avec les fractions (E1, E2, E3, E4) de la largeur mesurée du module précédent, de telle sorte que l'on obtient des largeurs de module corrigées (Mk), qui sont plus proches des largeurs de module réelles (M) que les largeurs de module mesurées (M') initialement.

6.  Procédé selon la revendication 4 ou 5, **caractérisé en ce que** les composants (EKOMP) de la première fonction d'appartenance (E) ont des valeurs faibles en dehors de chaque intervalle de longueur finie, de préférence inférieure ou égale au double de la longueur de séquence de base, situé de préférence symétriquement autour des multiples des longueurs de séquence de base à prendre en compte, et, à l'intérieur de chacun des intervalles, augmentent d'abord avec une pente de préférence finie, atteignent un maximum et chutent ensuite jusqu'aux extrémités correspondantes de l'intervalle, et/ou **en ce que** les composants (EKOMP) de la première fonction d'appartenance (E) atteignent chacune leur valeur maximale avec un multiple entier de la longueur de séquence de base, et/ou **en ce qu'**au moins un composant (EKOMP) de la première fonction d'appartenance (E) atteint la valeur maximale uniquement avec un multiple unique discret de la longueur de séquence de base, et/ou **en ce qu'**au moins un composant (EKOMP) de la première fonction d'appartenance (E) atteint la valeur maximale sur une fourchette de valeurs de largeur finie pour la longueur de séquence de base, et/ou **en ce que** la première fonction d'appartenance (E) comporte un composant pour chaque largeur de module apparaissant dans le code.

7.  Procédé selon la revendication 6, **caractérisé en ce que** la première fonction d'appartenance (E) comporte un composant pour chaque largeur de module apparaissant dans le code et, en plus, deux autres composants avec des maxima, qui sont supposés se situer à des longueurs de séquence de base au-dessus et au-dessous de la plus grande ou plus petite largeur de module apparaissant dans le code, sachant que le composant, dont le maximum se situe à une longueur de séquence de base au-dessous de la plus petite largeur de module apparaissant dans le code, atteint ce maximum entre la moitié de la plus petite largeur de module apparaissant dans le code et la plus petite largeur de module apparaissant dans le code, et le composant, dont le maximum se situe à une longueur de séquence de base au-dessus de la plus grande largeur de module apparaissant dans le code, atteint ce maximum entre cette plus grande largeur de module apparaissant et la plus grande largeur de module apparaissant augmentée d'un multiple entier de la longueur de séquence de base, et/ou chaque composant de la première fonction d'appartenance (E), atteignant son maximum à une largeur de module apparaissant dans le code, suit une courbe symétrique à l'intérieur d'un intervalle fini de longueur de séquence de base, cet intervalle se situant autour de la largeur de module, à laquelle le composant considéré atteint son maximum, et/ou **en ce que** chaque composant de la première fonction d'appartenance (E), atteignant son maximum non pas à une largeur de module apparaissant dans le code, suit une courbe asymétrique, et/ou **en ce qu'**au moins l'un des composants de la première fonction d'appartenance suit un accroissement linéaire à partir du début d'un intervalle, qui se situe autour de la longueur de séquence de base à laquelle le composant considéré atteint son maximum, jusqu'à un maximum et **en ce que**, après le maximum, le composant chute également de manière linéaire jusqu'au bord de l'intervalle.

8.  Procédé selon l'une des revendications 4 à 8, **caractérisé en ce que**, à l'intérieur des intervalles, qui sont situés autour des multiples des longueurs de séquence de base auxquels les composants atteignent leur maximum, les composants de la première fonction d'appartenance suivent une courbe de la forme :

$$EKOMP (X) = A + B * [SIN(X) / X]$$

dans laquelle A est une constante située de préférence à proximité du nombre réel 0 et B est une constante située de préférence à proximité du nombre réel 1, et X peut être calculé avec des nombres réels C et D :

$$X = C * (\text{largeur de module} - D),$$

équation dans laquelle en particulier la valeur D peut accepter un nombre différent pour chaque composant de la fonction d'appartenance, et/ou **en ce que**, en dehors des intervalles de longueur finie, situés de préférence symétriquement autour des multiples à considérer des longueurs de séquence de base, de préférence inférieure ou égale au double de la longueur de séquence de base, la première fonction d'appartenance est égale à zéro, et/ou **en ce que**, à l'intérieur de chacun des intervalles situés entre les multiples considérés des longueurs de séquence de base, les composants (KKOMP) de la deuxième fonction d'appartenance (K) augmentent d'abord avec une pente de préférence finie, atteignent un maximum et chutent ensuite également avec une pente de préférence finie et **en ce que**, en dehors de ces intervalles de longueur finie, de préférence inférieure au double de la longueur de séquence de base, situés de préférence symétriquement autour des multiples à considérer des longueurs de séquence de base, les composants de la deuxième fonction d'appartenance (K) ont de faibles valeurs, et/ou **en ce que**, entre le multiple zéro de la longueur de séquence de base et le multiple un de la longueur de séquence de base, la deuxième fonction d'appartenance (K) est égale à zéro, et/ou **en ce que** les composants de la deuxième fonction d'appartenance en dehors des intervalles atteignent la valeur zéro, et/ou **en ce que** l'accroissement de la deuxième fonction d'appartenance (K) commence avec les multiples à considérer de la longueur de séquence de base ou juste après ceux-ci et **en ce que** la pente descendante finit avant le prochain multiple à considérer, et/ou **en ce que**, avec des multiples de la longueur de séquence de base croissants à considérer, la fin de la pente descendante se situe à une plus grande distance devant le multiple entier à considérer pour la longueur de séquence de base, et/ou **en ce que** le nombre de composants de la deuxième fonction d'appartenance ne dépasse pas le nombre des combinaisons possibles des largeurs de module apparaissant dans le code, et/ou **en ce que** les composants de la deuxième fonction d'appartenance suivent une pente linéaire dans le domaine de la pente ascendante et de la pente descendante, et/ou **en ce que** les valeurs de correction (K1b, K2b, K3b) d'une largeur de module mesurée (M') sont combinées avec les fractions (E1a E2a, E3a, E4a) de la largeur mesurée du module précédent, **en ce que** le résultat de cette combinaison (Z) est combiné avec les fractions (E1b, E2b, E3b, E4b) de la largeur de module mesurée (M') et **en ce que** la moyenne du résultat de la deuxième combinaison (A1b A2b, A3b, A4b) ainsi obtenu est calculée par l'intermédiaire d'une fonction d'évaluation (A), de telle sorte que la largeur de module corrigée, correspondant à la valeur moyenne, est plus proche de la largeur de module entière réelle (M) que la largeur de module mesurée (M') initialement, et/ou **en ce que** la fonction d'évaluation (A) est formée par des fonctions qui, dans des intervalles situés symétriquement autour de chaque multiple à considérer de la longueur de séquence de base, décrivent des courbes symétriques et à variation linéaire, dont les maxima ont une valeur égale au résultat de la combinaison (A1, A2, A3, A4) et qui, à un multiple voisin à considérer, atteignent la valeur zéro, et **en ce que** le calcul de la moyenne de la fonction d'évaluation (A) est effectué par le calcul du barycentre de ces fonctions.

9. Système de lecture optique destiné à la mise en oeuvre du procédé selon l'une des revendications précédentes, comprenant un dispositif de lecture optique (12) qui, au moyen d'un émetteur de lumière (14), balaye successivement sur les modules (16, 17, 18, 19, 20, 21, 22) un point lumineux (13), dont la dimension est au maximum seulement faiblement supérieure à la largeur de base (B1) et au maximum seulement 1,5 fois supérieure à la longueur de séquence de base (B1) du code (11), et qui, au moyen d'un récepteur de lumière (15), capte la lumière rétrodiffusée par les zones du code (11) ciblées par le point lumineux (13) et émet, à sa sortie (24) un signal électrique correspondant, système dans lequel le récepteur de lumière (15) est raccordé à un niveau de déviation (26) avec redressement et un niveau de comptage (27) pour les impulsions de cadence générées par un générateur de cadence (28) respectivement entre deux hauteurs prédéfinies sur les flancs des impulsions isolées successives, ainsi qu'une mémoire (29), dans laquelle sont stockés les résultats de comptage individuels, **caractérisé en ce qu'**il est prévu un niveau de sélection à deux modules (30), qui enregistre respectivement la largeur mesurée (M') de deux modules successifs dans des unités de la longueur de séquence de base (B1) et la transmet vers un niveau de correction (31), qui corrige chaque largeur de module dans le sens de la largeur de module (M) réelle, conformément aux valeurs de correction stockées précédemment dans ce niveau pour chaque couple de largeurs de module, et émet un signal de largeur corrigée du module pour chaque largeur de module mesurée (M').

10. Système de lecture optique selon la revendication 9, **caractérisé en ce que** la dimension du point lumineux (13) est inférieure à la longueur de séquence de base (B1) et/ou **en ce que** le dispositif de lecture balaye périodiquement le point lumineux (13) successivement sur les modules (16, 17, 18, 19, 20, 21, 22) et/ou **en ce que**, pour chaque composant (EKOMP1, EKOMP2, EKOMP3, EKOMP4) d'une première fonction d'appartenance (E), à associer à un multiple à considérer de la longueur de séquence de base, le niveau de correction (31) contient un niveau Look-Up (LUTE), dans lequel sont stockés ces composants et qui calcule la fraction correspondante (E1, E2, E3, E4) pour le mot de donnée généré conformément à la largeur de module mesurée qui vient juste d'être considérée, et/ou **en ce que**, pour chaque composant (KKOMP1, KKOMP2, KKOMP3) d'une deuxième fonction d'appartenance (K), le niveau de correction contient en outre un niveau Lock-Up (LUTK), qui calcule la valeur de correction correspondante (K1, K2, K3) pour le mot de donnée généré conformément à la largeur de module mesurée considérée, et/ou **en ce que** les sorties des niveaux Look-Up (LUTE ; LUTK) sont connectées à un circuit de combinaison (32) et/ou **en ce que** le circuit de combinaison (32) algébrique comporte deux mémoires (33, 34) montées en parallèle, pour le stockage temporaire de toutes les fractions d'appartenance (E1a, E2a, E3a, E4a) de la première largeur de module mesurée ou de toutes les fractions d'appartenance (E1b, E2b, E3b, E4b) de la deuxième largeur de module mesurée et des valeurs de correction (K1b, K2b, K3b) de la deuxième largeur de module mesurée, lesquelles fractions et valeurs de correction ont été constatées dans les niveaux Look-Up (LUTE), un premier niveau de combinaison (35) raccordé aux deux mémoires (33, 34) et destiné à combiner les fractions (E1a, E2a, E3a, E4a) de la première largeur de module mesurée avec les valeurs de correction (K1b, K2b, K3b) de la deuxième largeur de module mesurée, un deuxième niveau de combinaison (36) supplémentaire raccordé au premier niveau de combinaison (35) et à la deuxième mémoire (34), et destiné à combiner la sortie (Z) du premier niveau de combinaison (35) et les fractions (E1b, E2b, E3b, E4b) de la deuxième largeur de module, de telle sorte que la moyenne du résultat (A1b, A2b, A3b, A4b) de cette combinaison est calculée par l'intermédiaire de la fonction d'évaluation (A) implémentée dans un niveau d'évaluation (37), et **en ce que** la largeur de module corrigée (Mk) correspondant à la valeur moyenne est plus proche de la largeur de module entière réelle (M) que la largeur de module mesurée initialement (Mb), et/ou **en ce que** la fonction d'évaluation (A) implémentée est formée par des fonctions qui, dans des intervalles situés symétriquement autour de chaque multiple à considérer de la longueur de séquence de base, décrivent des courbes symétriques et à variation linéaire, dont les maxima ont une valeur égale au résultat de la combinaison (A1b, A2b, A3b, A4b) et qui, à un multiple voisin à considérer, atteignent la valeur zéro, et/ou **en ce qu'**un élément de valeur de seuil (42) est monté entre le niveau de déviation (26) avec redressement et le niveau de comptage, lequel élément de valeur de seuil, au moment où les flancs ascendants et descendants des différentes impulsions (41) sont supérieurs ou inférieurs à une amplitude prédéfinie, émet un signal de rappel et un signal de déclenchement vers le niveau de comptage (27).

# Fig.1

E 1 = 0,25    E 1 = 0    E 1 = 0,25    E1= 1    E 1 = 1    E 1 = 0,25
E 2 = 0,8     E 2 = 0    E 2 = 0,8     E2 = 0   E 2 = 0   E 2 = 0,8
E 3 = 0       E 3 = 0    E 3 = 0       E 3 = 0  E 3 = 0   E 3 = 0
E 4 = 0       E 4 = 1    E 4 = 0       E 4 = 0  E 4 = 0   E 4 = 0

K 1 = 0,8     K 1 = 0    K 1 = 0,8     K 1 = 0  K1 = 0,25  K 1 = 0,8
K 2 = 0       K 2 = 0    K 2 = 0       K 2 = 0  K 2 = 0   K 2 = 0
K 3 = 0       K 3 = 0    K 3 = 0       K 3 = 0  K 3 = 0   K 3 = 0

Fig. 2

# Fig. 3

K

KKOMP1  KKOMP2  KKOMP3

1,0

K1 = 0,8

K2 = K3 = 0   0,0

1   2   3   4   M'(Bl)

1,63   4,07

Fig. 4

# Fig. 5